# EUROPÄISCHE PATENTANMELDUNG

(11) **EP 2 634 051 A1**
(43) Veröffentlichungstag der Anmeldung: **04.09.2013**
(21) Anmeldenummer: 12157814.0
(22) Anmeldetag: 01.03.2012
(51) Int. Cl.: B60T 7/10, B60T 11/18, B62K 11/14, B62K 23/06, B62L 3/02

(54) **Geberarmatur**

(71) Anmelder: Gustav Magenwirth GmbH & Co. KG, 72574 Bad Urach (DE)
(72) Erfinder: Ruopp, Michael, 89180 Berghülen (DE)
(74) Vertreter: Friese, Martin

(57) **Zusammenfassung**

Geberarmatur für ein hydraulisches Bremssystem oder Kupplungssystem, insbesondere eines lenkergeführten Fahrzeugs, insbesondere eines Fahrrads, mit einem einen Kolbenraum enthaltenden Gehäuse, in dem ein darin verschiebbarer Kolben und ein Druckraum angeordnet ist, und einem Ausgleichsraum, der über zumindest eine Ausgleichsbohrung mit dem Druckraum verbunden ist, wobei das Gehäuse einen Befestigungsabschnitt zur Befestigung an einem Lenkerrohr aufweist, und der Ausgleichsraum sich bis zu dem Befestigungsabschnitt erstreckt und ein Trennglied zur Trennung des hydraulischen Mediums von einem Ausgleichsvolumen aufweist, wobei der Befestigungsabschnitt ein Klemmteil (51) aufweist, das derart ausgebildet und angeordnet ist, dass es das Trennglied an dem Befestigungsabschnitt befestigt.

## Beschreibung

Die Erfindung betrifft eine Geberarmatur gemäß dem Oberbegriff von Anspruch 1, insbesondere eine Geberarmatur für ein Hydraulikbremssystem oder ein Hydraulikkupplungssystem lenkergeführter Fahrzeuge und weiter insbesondere für ein Fahrradhydraulikbremssystem bzw. eine hydraulische Fahrradscheibenbremse.

Der Erfindung liegt die Aufgabe zugrunde, eine Geberarmatur anzugeben, bei hoher Qualität ein geringes Gewicht aufweist.

Diese Aufgabe der Erfindung wird mit einer Geberarmatur gemäß den Merkmalen von einem der unabhängigen Ansprüche gelöst. Vorteilhafte Ausgestaltungen der Erfindung sind in den abhängigen Ansprüchen bzw. der Beschreibung und insbesondere der folgenden Beschreibung angegeben.

Gemäß einer Ausführung der Erfindung wird eine Geberarmatur für ein hydraulisches Bremssystem oder Kupplungssystem, insbesondere eines lenkergeführten Fahrzeugs, insbesondere eines Fahrrads, mit einem einen Kolbenraum enthaltenden Gehäuse angegeben, in dem ein darin verschiebbarer Kolben und ein Druckraum angeordnet ist, und einem Ausgleichsraum, der über zumindest eine Ausgleichsbohrung mit dem Druckraum verbunden ist, wobei das Gehäuse einen Befestigungsabschnitt zur Befestigung an einem Lenkerrohr aufweist, und der Ausgleichsraum sich bis zu dem Befestigungsabschnitt erstreckt und ein Trennglied zur Trennung des hydraulischen Mediums von einem Ausgleichsvolumen aufweist, wobei der Befestigungsabschnitt ein Klemmteil aufweist, das derart ausgebildet und angeordnet ist, dass es das Trennglied an dem Befestigungsabschnitt befestigt.

Gemäß einer Ausführung der Erfindung wird eine Geberarmatur für ein hydraulisches Bremssystem oder Kupplungssystem, insbesondere eines lenkergeführten Fahrzeugs, insbesondere eines Fahrrads, mit einem einen Kolbenraum enthaltenden Gehäuse angegeben, in dem ein darin verschiebbarer Kolben und ein Druckraum angeordnet ist, und einem Ausgleichsraum, der über zumindest eine Ausgleichsbohrung mit dem Druckraum verbunden ist, wobei das Gehäuse einen Befestigungsabschnitt zur Befestigung an einem Lenkerrohr aufweist, und der Ausgleichsraum sich bis zu dem Befestigungsabschnitt erstreckt und ein Trennglied zur Trennung des hydraulischen Mediums von einem Ausgleichsvolumen aufweist, wobei der Befestigungsabschnitt und das Trennglied derart angeordnet und ausgebildet sind, dass das Trennglied bei der Befestigung der Geberarmatur an einem Lenkerrohr vorzugsweise mit seinem Rand zwischen dem Lenkerrohr und dem Befestigungsabschnitt geklemmt wird.

Gemäß einer Ausführung der Erfindung wird eine Geberarmatur für ein hydraulisches Bremssystem oder Kupplungssystem, insbesondere eines lenkergeführten Fahrzeugs, insbesondere eines Fahrrads, mit einem einen Kolbenraum enthaltenden Gehäuse angegeben, in dem ein darin verschiebbarer Kolben und ein Druckraum angeordnet ist, und einem Ausgleichsraum, der über zumindest eine Ausgleichsbohrung mit dem Druckraum verbunden ist, wobei das Gehäuse einen Befestigungsabschnitt zur Befestigung an einem Lenkerrohr aufweist, und der Ausgleichsraum sich bis zu dem Befestigungsabschnitt erstreckt und ein Trennglied zur Trennung des hydraulischen Mediums von einem Ausgleichsvolumen aufweist, wobei das Trennglied ein mit Gas befüllter Körper und/oder ein komprimierbarer Körper und/oder ein elastisch verformbarer Körper ist, der in dem Ausgleichsraum und/oder an einem Lenkerrohr angeordnet ist.

Beispielsweise kann der in dem Ausgleichsraum angeordnete Körper aus einem elastischen Material und/oder Gummi ausgebildet sein. Alternativ oder zusätzlich kann der Körper schwammartig ausgebildet sein, um einen eine Veränderung der Menge an Hydraulikmedium in dem Ausgleichsraum ausgleichen zu können.

Diese Ausführungen der Erfindung haben den Vorteil, dass ein Trennglied eventuell weggelassen werden kann und/oder weniger Raum für den Volumenausgleich für das Trennglied benötigt wird.

Gemäß einer Ausführung der Erfindung wird eine Geberarmatur für ein hydraulisches Bremssystem oder Kupplungssystem, insbesondere eines lenkergeführten Fahrzeugs, insbesondere eines Fahrrads, mit einem einen Kolbenraum enthaltenden Gehäuse angegeben, in dem ein darin verschiebbarer Kolben und ein Druckraum angeordnet ist, und einem Ausgleichsraum, der über zumindest eine Ausgleichsbohrung mit dem Druckraum verbunden ist, wobei das Gehäuse einen Befestigungsabschnitt zur Befestigung an einem Lenkerrohr aufweist, und der Ausgleichsraum sich bis zu dem Befestigungsabschnitt erstreckt und ein Trennglied zur Trennung des hydraulischen Mediums von einem Ausgleichsvolumen aufweist, wobei der Ausgleichsraum bei einer an einem Lenkerrohr befestigten Geberarmatur in das Lenkerrohr erstreckt, wobei das Trennglied vorzugsweise in einer Öffnung in dem Lenkerrohr angeordnet ist und/oder sich in das Lenkerrohr erstreckt.

Erfindungsgemäß kann der Befestigungsabschnitt ein Klemmteil aufweisen, das derart ausgebildet und angeordnet ist, dass es das Trennglied an dem Befestigungsabschnitt befestigt, und/oder kann der Befestigungsabschnitt und das Trennglied derart angeordnet und ausgebildet sein, dass das Trennglied bei der Befestigung der Geberarmatur an einem Lenkerrohr vorzugsweise mit seinem Rand zwischen dem Lenkerrohr und dem Befestigungsabschnitt geklemmt wird, und/oder kann das Trennglied ein mit Gas befüllter Körper und/oder ein komprimierbarer Körper und/oder ein elastisch verformbarer Körper und/oder ein komprimierbarer Körper und/oder ein elastisch verformbarer Körper sein, der in dem Ausgleichsraum und/oder an einem Lenkerrohr angeordnet ist, und/oder kann sich der Ausgleichsraum bei einer an einem Lenkerrohr befestigten Geberarmatur in das Lenkerrohr erstrecken, wobei das Trennglied vorzugsweise in einer Öffnung in dem Lenkerrohr angeordnet ist und/oder sich in das Lenkerrohr erstreckt.

Erfindungsgemäß kann das Trennglied derart ausgebildet sein, dass es ein Loch in einem Lenkerrohr, an dem die Geberarmatur zu befestigen ist, verschließt. Das hat den Vorteil, dass das Trennteil bei den auszugleichenden Volumenschwankungen in das Lenkerrohr ausweichen kann. Dadurch ergibt sich eine besonders kompakte Bauweise mit einer entsprechenden Gewichtsersparnis.

Erfindungsgemäß kann das Klemmteil als Rahmen und/oder das Trennglied als Balg ausgebildet sein, wobei das Klemmteil vorzugsweise zumindest eine oder mehrere Stege aufweist.

Bei Ausführungen mit mehreren Stegen können diese parallel zu einander und/oder quer zueinander angeordnet sein. Die Stege können auch gitterförmig angeordnet sein, oder derart, dass sich ein Lochmuster ergibt.

Erfindungsgemäß kann das Klemmteil siebartig ausgebildet sein.

Erfindungsgemäß kann das Klemmteil zumindest einen oder mehrere Belüftungskanäle aufweisen.

Erfindungsgemäß können das Trennglied bzw. der Balg und das Klemmteil bzw. der Rahmen mit einer Schnappverbindung miteinander verbunden sein.

Erfindungsgemäß kann das Trennglied eine Versteifung in seinem Randbereich aufweisen. Die Versteilung kann beispielsweise durch eine Einlage bzw. eine Materialverstärkung erreicht werden. Bei diesen Ausführungen kann das Trennglied beispielsweise auf das Gehäuse geklebt bzw. gesteckt sein und bei der Befestigung des Gehäuses an dem Lenkerrohr zusätzlich zwischen Lenkerrohr und Gehäuse geklemmt werden.

Erfindungsgemäß kann das Klemmteil als ein Rahmen ausgebildet sein, der an seinem Umfang Unterbrechungen aufweist. Vorteilhafterweise weist das Klemmteil bei mehreren Unterbrechungen zumindest einen Steg auf, der die Rahmenteile miteinander verbindet. Bei Ausführungen mit nur einer Unterbrechung ist ein Verbindungssteg entbehrlich.

Bei den erfindungsgemäßen Ausführungen, bei denen das Klemmteil zumindest eine oder mehrere große Öffnungen aufweist, ergibt sich der Vorteil, dass sich das Trennglied bis zu dem Lenkerrohr bewegen kann. Dadurch kann eine wesentlich kompaktere Bauweise erreicht werden, wodurch die Geberarmatur leichter ausgebildet werden kann.

Bei den erfindungsgemäßen Ausführungen, bei denen sich der Ausgleichsraum und/oder das Trennteil in das Lenkerrohr erstrecken, kann ebenfalls eine äußerst kompakte Bauweise erreicht werden, die mit einer starken Gewichtsersparnis einhergeht.

Erfindungsgemäß kann das Trennglied mittels des Lenkerrohrs und einer Schelle an dem Gehäuse der Geberarmatur fixiert bzw. angeordnet bzw. anordbar sein.

Erfindungsgemäß kann eine Klemmung des Trennglieds durch das Lenkerrohr und/oder eine Schelle erfolgen.

Erfindungsgemäß kann eine Klemmung des Trennglieds über einen Rahmen erfolgen, der an dem Gehäuse der Geberarmatur befestigt ist. Erfindungsgemäß muss bei diesen Ausführungen der Erfindung kein Deckel vorgesehen sein, der den Ausgleichsraum verschließt. Ein Schutz des Ausgleichsraums und des Trennglieds vor einer Beschädigung kann durch das Lenkerrohr erreicht werden, dass einen Zugang zu dem Trennglied von außen behindert bzw. verhindert (abgesehen von etwaigen Belüftungskanälen).

Erfindungsgemäß kann das Klemmteil mit Schrauben an dem Gehäuse der Geberarmatur befestigt sein. Dabei kann vorzugsweise das Trennglied zwischen dem Gehäuse und dem Klemmteil geklemmt sein.

Erfindungsgemäß kann die Geberarmatur des Weiteren ein Gegenstück zur Befestigung der Geberarmatur an einem Lenkerrohr und zumindest eine Verbindungseinrichtung zur Verbindung des Gegenstücks mit dem Gehäuse der Geberarmatur aufweisen. Dabei kann vorzugsweise die zumindest eine Verbindungseinrichtung einen ersten Verbindungsabschnitt zur Verbindung des Klemmteils mit dem Gehäuse der Geberarmatur und einen zweiten Verbindungsabschnitt zur Verbindung des Gegenstücks mit der Geberarmatur und zur Befestigung der Geberarmatur an einem Lenkerrohr aufweisen, und kann weiter vorzugsweise zwischen dem ersten Verbindungsabschnitt und dem zweiten Verbindungsabschnitt der zumindest einen Verbindungseinrichtung ein Bund vorgesehen sein.

Erfindungsgemäß kann die Geberarmatur zumindest eine Verbindungseinrichtung zur Verbindung des Gegenstücks mit dem Gehäuse der Geberarmatur aufweisen, wobei die zumindest eine Verbindungseinrichtung einen ersten Verbindungsabschnitt zur Verbindung des Klemmteils mit dem Gehäuse der Geberarmatur und einen zweiten Verbindungsabschnitt zur Verbindung des Gegenstücks mit der Geberarmatur und zur Befestigung der Geberarmatur an einem Lenkerrohr aufweist.

Diese Ausführung hat den Vorteil, dass infolge der Doppelfunktion der Verbindungseinrichtung zunächst das Klemmteil sicher an dem Gehäuse befestigt werden kann, und dass anschließend das Gegenstück mit dem Gehäuse der Geberarmatur verbunden werden kann, um die Geberarmatur an einem Lenkerrohr zu befestigen, das dabei zwischen dem Klemmteil und dem Gegenstück angeordnet wird.

Erfindungsgemäß kann zwischen dem ersten Verbindungsabschnitt und dem zweiten Verbindungsabschnitt der zumindest einen Verbindungseinrichtung ein Bund vorgesehen sein. Diese Ausführung hat den Vorteil, dass das Klemmteil bei der Befestigung der zumindest einen Verbindungseinrichtung an dem Gehäuse der Geberarmatur fest gegen das Gehäuse gepresst werden kann.

Erfindungsgemäß kann an dem Klemmteil ein Anschlag vorgesehen sein, an den der Bund anschlägt bzw. an dem sich der Bund abstützt, um ein weiteres Eindringen der zumindest einen Verbindungseinrichtung in das Gehäuse zu verhindern, wenn das Klemmteil hinreichend fest mit dem Gehäuse verbunden ist.

Erfindungsgemäß kann die Verbindungseinrichtung bzw. der Bund derart ausgebildet sein, dass der Bund bei der Befestigung der zumindest einen Verbindungseinrichtung an dem Gehäuse das Klemmteil gegen das Gehäuse presst und damit verbindet. Zwischen Klemmteil und Gehäuse kann vorzugsweise ein Trennglied vorgesehen sein, das vorzugsweise durch den Rand eines Balgs ausgebildet sein kann.

Erfindungsgemäß können zumindest zwei Verbindungseinrichtungen vorgesehen sein, die vorzugsweise über den Umfang des Klemmteils gleichverteilt angeordnet sind.

Erfindungsgemäß kann gegenüber der zumindest einen Verbindungseinrichtung eine Gelenkeinrichtung vorgesehen sein, wobei das Gegenstück vorzugsweise derart ausgebildet ist, dass es an der Gelenkeinrichtung angelenkt werden kann und mit der vorzugsweise gegenüberliegenden Seite mit der Geberarmatur verbindbar ist, wobei vorzugsweise das Lenkerrohr zwischen dem Klemmteil und dem Gegenstück zur Befestigung der Geberarmatur an dem Lenkerrohr eingeklemmt wird.

Erfindungsgemäß kann die mindestens eine Verbindungseinrichtung bzw. können die Verbindungseinrichtungen einen Stehbolzen umfassen.

Erfindungsgemäß kann die mindestens eine Verbindungseinrichtung bzw. können die Verbindungseinrichtungen einen ersten Gewindeabschnitt zur Befestigung des Stehbolzens im Gehäuse umfassen. Alternativ oder zusätzlich kann die Verbindungseinrichtung auch auf eine andere oder zusätzliche Weise mit dem Gehäuse verbunden werden bzw. sein. Beispielsweise kann eine Presspassung vorgesehen werden, mit der die Verbindungseinrichtung in dem Gehäuse befestigt wird und dabei das Klemmteil an dem Gehäuse der Geberarmatur befestigt. Vorzugsweise wird das Klemmteil dabei mit einem Bund an das Gehäuse gepresst.

Erfindungsgemäß kann der erste Verbindungsabschnitt eine Steckeinrichtung, die in eine entsprechende Aussparung des Gehäuses eingedreht bzw. eingepresst werden kann, und/oder mit einer Aussparung versehenen Abschnitt aufweisen, in den ein entsprechender Abschnitt des Gehäuses eingreifen kann, um den ersten Verbindungsabschnitt mit dem Gehäuse zu verbinden und dabei das Klemmteil an das Gehäuse zu pressen. Vorzugsweise weist das Klemmteil eine Öffnung bzw. eine Bohrung auf, durch die der erste Verbindungsabschnitt bei der Befestigung des Klemmteils an dem Gehäuse der Geberarmatur hindurchgeführt wird.

Erfindungsgemäß kann der erste Gewindeabschnitt einen bolzenartigen und/oder schraubenartigen Fortsatz bzw. Abschnitt aufweisen, der in eine entsprechende Aufnahme in dem Gehäuse zur Befestigung der Verbindungseinrichtung und des Klemmteils an dem Gehäuse der Geberarmatur eingreifen kann bzw. dort eingeschraubt bzw. dort eingepresst werden kann.

Alternativ oder zusätzlich kann erfindungsgemäß der erste Gewindeabschnitt einen mutterartigen Fortsatz aufweisen, der in eine entsprechende Aufnahme in dem Gehäuse zur Befestigung der Verbindungseinrichtung und des Klemmteils an dem Gehäuse der Geberarmatur eingreifen kann bzw. dort eingeschraubt bzw. dort eingepresst werden kann.

Erfindungsgemäß kann der zweite Gewindeabschnitt zur Befestigung von Verbindungsmitteln zur Befestigung des Gegenstücks an dem Klemmteil bzw. mit dem Gehäuse an dem Lenkerrohr einen bolzenartigen und/oder schraubenartigen Fortsatz aufweisen, mit dem ein mutterartiges Befestigungsmittel zur Befestigung des Gegenstücks verbunden werden kann.

Alternativ oder zusätzlich kann erfindungsgemäß der zweite Gewindeabschnitt zur Befestigung von Verbindungsmitteln zur Befestigung des Gegenstücks an dem Klemmteil bzw. mit dem Gehäuse an dem Lenkerrohr einen mutterartigen Fortsatz aufweisen, mit dem ein bolzen- und/oder schraubenartiges Befestigungsmittel zur Befestigung des Gegenstücks verbunden werden kann.

Erfindungsgemäß kann die zumindest eine Verbindungseinrichtung einen Spezialwerkzeugeingriff aufweisen, wobei mittels eines Spezialwerkzeugs die zumindest eine Verbindungseinrichtung an dem Gehäuse angebracht werden und dabei das Klemmteil mit dem Gehäuse verbunden werden kann. Diese Ausführung hat den Vorteil, dass der Benutzer die Geberarmatur nicht öffnen kann. Dadurch ist ein sicherer Betrieb gewährleistet.

Erfindungsgemäß kann zumindest eine weitere Ausgleichsbohrung vorgesehen sein, die den Druckraum mit dem Ausgleichsraum verbindet, und/oder der Ausgleichsraum zwischen der zylinderförmigen Wand des Kolbenraums und der Gehäusewand des den Kolbenraum aufnehmenden Gehäuses der Geberarmatur vorgesehen sein, und/oder

zwischen der den Kolbenraum abgrenzenden zylinderförmigen Wand und einer den Ausgleichsraum definierenden Wandung (die insbesondere eine Wand des Gehäuses der Geberarmatur sein kann) zumindest ein Steg und/oder eine Rippe vorgesehen sein, die die Ausgleichsraumwand mit der Kolbenraumwand verbindet, und/oder
der Ausgleichsraum zumindest teilweise die zylinderförmige Wand des Kolbenraums umschliessen, und/oder
der Ausgleichsraum in zumindest zwei Sektoren unterteilt sein, die seitlich von der zylinderförmigen den Kolbenraum begrenzenden Wand angeordnet sind.

Diese Ausführungen der Erfindung haben den Vorteil, dass die Geberarmatur mit dem Ausgleichsraum extrem kompakt gebaut werden kann, wobei gleichzeitig ein hinreichendes Volumen für den Ausgleichsraum zur Verfügung gestellt wird. Außerdem ist eine hinreichende Stabilität gegeben.

Beispielsweise kann der Ausgleichsraum zumindest 90° des Kolbenraums umschließen, weiter vorzugsweise zumindest 120°, weiter vorzugsweise zumindest 150°, weiter vorzugsweise zumindest 180°, weiter vorzugsweise zumindest 210°, weiter vorzugsweise zumindest 240°, weiter vorzugsweise zumindest 270°, weiter vorzugsweise zumindest 300°, weiter vorzugsweise zumindest 330° und bevorzugt den gesamten Umfang des Kolbenraums umschließen.

Der Begriff zylinderförmige den Kolbenraum begrenzende Wand ist im Zusammenhang mit dem vorliegenden Schutzrecht so zu verstehen, dass die Innenseite der den Kolbenraum definierenden Wand, an der ein Kolben bei der Betätigung der Geberarmatur entlang gleitet und üblicherweise über eine Dichtung abgedichtet ist, gemeint ist.

Die Außenseite der zylinderförmigen den Kolbenraum begrenzenden Wand kann selbstverständlich auch eine unebene Form aufweisen. Vorteilhafterweise ist die Außenwand auch im Wesentlichen zylinderförmig, damit ein möglichst großes Volumen für den Ausgleichsraum zur Verfügung steht.

Eine Verbindung zwischen dem Ausgleichsraum und dem Druckraum über die Ausgleichsbohrungen findet solange statt, wie die Dichtung des Kolbens die Ausgleichsbohrungen nicht überfahren hat. Vorteilhafterweise sind die in den Kolbenraum mündenden Öffnungen der Ausgleichsbohrungen zumindest etwa an der bezogen auf die Bewegungsrichtung des Kolbens gleichen Stelle angeordnet, damit die Öffnungen der Ausgleichsbohrungen gleichzeitig überfahren werden.

Erfindungsgemäß kann der Ausgleichsraum über zumindest zwei Stege in drei Sektoren aufgeteilt sein. Beispielsweise können die Sektoren gleichmäßig um die zylinderförmige Wand des Kolbenraums verteilt sein, so dass sie beispielsweise jeweils einen Sektor von 120° aufweisen. Es ist klar, dass von den 120° ein paar Grad abzuziehen sind, die durch die Stärke des den Sektor begrenzenden Stegs bestimmt sind.

Gemäß einer bevorzugten Ausführungsform der Erfindung kann der Ausgleichsraum in vier Sektoren unterteilt sein, die jeweils ungefähr 90° aufweisen und durch vier gleichmäßig um den Umfang des Kolbenraums angeordnete Stege zumindest im unteren Bereich unterteilt sind.

Erfindungsgemäß können die einzelnen Sektoren des Ausgleichsraums oberhalb der die den Ausgleichsraum in Sektoren unterteilenden Stege miteinander verbunden sein. Das hat den Vorteil, dass die Ausgleichsraumsektoren mit einem einzigen Balg abgedichtet werden können.

Erfindungsgemäß kann die Geberarmatur eine Einstellvorrichtung zum Einstellen der Griffweite und des Druckpunkts aufweisen, wobei die Einstellvorrichtung ein Betätigungselement aufweist, mit dem in einer ersten Stellung die Griffweite und in einer zweiten Stellung der Druckpunkt einstellbar ist.

Die erfindungsgemäße Ausführung der Geberarmatur hat den Vorteil, dass in Folge der Doppelfunktion des Betätigungselements die Einstellvorrichtung sehr kompakt und kleinbauend ausgebildet werden kann. Dadurch können Gewicht und Kosten eingespart werden. Außerdem ist die Einstellung sehr einfach.

Erfindungsgemäß kann das Betätigungselement mit einer Federvorrichtung in die erste Stellung zur Einstellung der Griffweite und/oder in die zweite Stellung zur Einstellung des Druckpunkts vorgespannt werden. Erfindungsgemäß kann die Einstellvorrichtung derart ausgebildet sein, dass das Betätigungselement in der Einstellung mit einer Rasthülse in Eingriff bringbar ist, die ein zweites Element umgibt, das mit dem Betätigungselement in der anderen Stellung in Eingriff bringbar ist. Diese Ausführung der Erfindung hat den Vorteil einer äußerst kompakten Bauweise mit dem damit verbundenen geringen Gewicht.

Erfindungsgemäß kann das Betätigungselement ein Drehknopf sein, der in der ersten Stellung mit einem ersten Einstellglied drehfest verbunden ist, und einer zweiten Stellung mit einem zweiten Einstellglied drehfest verbunden ist.

Erfindungsgemäß kann das Betätigungselement von der ersten Stellung in die zweite Stellung durch Drücken des Betätigungselements geführt werden.

Erfindungsgemäß kann das Betätigungselement zum Einstellen in der ersten Stellung und/oder in der zweiten Stellung gedreht werden, um das mit dem Betätigungselement drehfest verbundene Einstellglied zu drehen.

Erfindungsgemäß kann die Geberarmatur eine Einstellvorrichtung zum Einstellen der Griffweite durch Verstellen des Winkels zwischen dem Hebel und dem Druckstück aufweisen, wobei sich die Einstellvorrichtung auf dem Druckstück abstützt, wobei die Einstellvorrichtung einen Abstandshalter aufweist, der sich auf dem Druckstück abstützt und der durch das Druckstück gegen eine Verdrehung gesichert ist.

Diese Ausführung der Erfindung hat den Vorteil einer kompakten Bauweise, die ein geringes Gewicht und geringe Kosten bedient.

Erfindungsgemäß kann der Abstandshalter einen Fortsatz aufweisen, der zwischen einem Bereich des Druckstücks angeordnet ist, der im Wesentlichen gabelförmig ausgebildet ist und/oder zwischen zwei Fortsätzen des Druckstücks angeordnet ist, derart, dass der Abstandshalter gegen Drehen gesichert ist.

Erfindungsgemäß kann der Abstandshalter einen Punkt bzw. Flansch aufweisen, der sich seitlich von dem Abstandshalter weg erstreckt und sich auf dem Druckstück abstützt. Seitlich heißt in diesem Zusammenhang senkrecht zu der Ebene, in der der Hebel und das Druckstück bei der Betätigung der Geberarmatur geschwenkt bzw. gedreht wird.

Erfindungsgemäß kann die Geberarmatur eine Druckpunkteinstellvorrichtung aufweisen, wobei die Druckpunkteinstellvorrichtung derart angeordnet und ausgebildet ist, dass der Endanschlag des Kolbens an dem Gehäuse einstellbar ist.

Erfindungsgemäß kann die Einstellvorrichtung ein mit dem Gehäuse drehfestes Anschlagglied aufweisen, das axial gegenüber dem Gehäuse verschiebbar angeordnet ist, und/oder kann die Einstellvorrichtung ein Einstellglied aufweisen, das relativ zu dem Zylindergehäuse verdrehbar angeordnet ist, und dessen Bewegung in axialer Richtung bezogen auf den Zylinder begrenzt ist.

Erfindungsgemäß kann die Begrenzung des Einstellglieds in axialer Richtung durch einen Stift erfolgen, der in dem Gehäuse gelagert ist.

Erfindungsgemäß kann die Geberarmatur einen Hebel und ein Zylindergehäuse aufweisen, in dem ein Kolben verschiebbar angeordnet ist, wobei der Kolben gegen Drehen in dem Zylindergehäuse gesichert ist, und das die Kolbenlageerfassungseinrichtung ein bezogen auf den Umfang des Kolbens asymmetrisch angeordnetes Signalglied und ein dem Signalglied zugeordnetes und/oder diesem gegenüberliegendes Erfassungsglied aufweist.

Erfindungsgemäß können das Signalglied ein Stabmagnet und das Erfassungsglied ein Hallsensor sein. Diese Ausführung der Erfindung hat den Vorteil, dass die Kolbenlageerfassungseinrichtung einfach und kostengünstig ausgebildet werden kann. Es ist insbesondere nicht notwendig, eine bezogen auf dem Umfang des Kolbens und des Gehäuses symmetrische Anordnung bereit zu stellen, um nur eine richtige Erfassung der Lage in axialer Richtung des Kolbens zu erhalten, auch wenn der Kolben in dem Gehäuse gedreht wird.

Erfindungsgemäß können die erfindungsgemäßen Geberarmaturen für hydraulische Bremsen oder Kupplungen verwendet werden bzw. Teil davon sein. Insbesondere können die erfindungsgemäßen Geberarmaturen Teile von hydraulischen Scheibenbremsen oder Felgenbremsen von Fahrrädern oder anderen lenkergeführten Fahrzeugen sein bzw. dafür verwendet werden.

Erfindungsgemäß kann das Material des Gehäuses der Geberarmatur bzw. der Bremszange Druckguss und/oder faserverstärkten Kunststoff, insbesondere einen kohlefaserverstärkten Kunststoff, beispielsweise einen Duroplast und/oder einen Thermoplast, aufweisen.

Die Erfindung wird im Folgenden anhand der in den Figuren gezeigten Ausführungsbeispiele näher beschrieben.
- Fig. 1A: zeigt eine Ansicht eines Klemmteils einer Geberarmatur gemäß einer Ausführung der Erfindung von unten (d.h. aus der Richtung des Lenkerrohrs, an dem die Geberarmatur zu befestigen ist).
- Fig. 1B: zeigt eine Seitenansicht des Klemmteils von Fig. 1A.
- Fig. 1C: zeigt eine Aufsicht des Klemmteils von Fig. 1A.
- Fig. 1D: zeigt eine Seitenansicht des Klemmteils von Fig. 1A.
- Fig. 2A: zeigt eine Ansicht eines Klemmteils einer Geberarmatur gemäß einer Ausführung der Erfindung von unten (d.h. aus der Richtung des Lenkerrohrs, an dem die Geberarmatur zu befestigen ist).
- Fig. 2B: zeigt eine Seitenansicht des Klemmteils von Fig. 2A.
- Fig. 2C: zeigt eine Aufsicht des Klemmteils von Fig. 2A.
- Fig. 2D: zeigt eine Seitenansicht des Klemmteils von Fig. 2A.
- Fig. 3A: zeigt eine Ansicht eines Klemmteils einer Geberarmatur gemäß einer Ausführung der Erfindung von unten (d.h. aus der Richtung des Lenkerrohrs, an dem die Geberarmatur zu befestigen ist).
- Fig. 3B: zeigt eine Seitenansicht des Klemmteils von Fig. 3A.
- Fig. 3C: zeigt eine Aufsicht des Klemmteils von Fig. 3A.
- Fig. 3D: zeigt eine Seitenansicht des Klemmteils von Fig. 3A.
- Fig. 4A: zeigt eine Ansicht eines Klemmteils einer Geberarmatur gemäß einer Ausführung der Erfindung von unten (d.h. aus der Richtung des Lenkerrohrs, an dem die Geberarmatur zu befestigen ist).
- Fig. 4B: zeigt eine Seitenansicht des Klemmteils von Fig. 4A.
- Fig. 4C: zeigt eine Aufsicht des Klemmteils von Fig. 4A.
- Fig. 4D: zeigt eine Seitenansicht des Klemmteils von Fig. 4A.
- Fig. 5A: zeigt eine Ansicht eines Klemmteils einer Geberarmatur gemäß einer Ausführung der Erfindung von unten (d.h. aus der Richtung des Lenkerrohrs, an dem die Geberarmatur zu befestigen ist).
- Fig. 5B: zeigt eine Seitenansicht des Klemmteils von Fig. 5A.
- Fig. 5C: zeigt eine Aufsicht des Klemmteils von Fig. 5A.
- Fig. 5D: zeigt eine Seitenansicht des Klemmteils von Fig. 5A.
- Fig. 6A: zeigt eine Ansicht eines Klemmteils einer Geberarmatur gemäß einer Ausführung der Erfindung von unten (d.h. aus der Richtung des Lenkerrohrs, an dem die Geberarmatur zu befestigen ist).
- Fig. 6B: zeigt eine Seitenansicht des Klemmteils von Fig. 6A.
- Fig. 6C: zeigt eine Aufsicht des Klemmteils von Fig. 6A.
- Fig. 6D: zeigt eine Seitenansicht des Klemmteils von Fig. 6A.
- Fig. 7A: zeigt eine Ansicht eines Klemmteils einer Geberarmatur gemäß einer Ausführung der Erfindung von unten (d.h. aus der Richtung des Lenkerrohrs, an dem die Geberarmatur zu befestigen ist).
- Fig. 7B: zeigt eine Seitenansicht des Klemmteils von Fig. 7A.
- Fig. 7C: zeigt eine Aufsicht des Klemmteils von Fig. 7A.
- Fig. 7D: zeigt eine Seitenansicht des Klemmteils von Fig. 7A.
- Fig. 8A: zeigt eine Ansicht eines Klemmteils einer Geberarmatur gemäß einer Ausführung der Erfindung von unten (d.h. aus der Richtung des Lenkerrohrs, an dem die Geberarmatur zu befestigen ist).
- Fig. 8B: zeigt eine Seitenansicht des Klemmteils von Fig. 8A.
- Fig. 8C: zeigt eine Aufsicht des Klemmteils von Fig. 8A.
- Fig. 8D: zeigt eine Seitenansicht des Klemmteils von Fig. 8A.
- Fig. 9A: zeigt eine Ansicht eines Klemmteils einer Geberarmatur gemäß einer Ausführung der Erfindung von unten (d.h. aus der Richtung des Lenkerrohrs, an dem die Geberarmatur zu befestigen ist).
- Fig. 9B: zeigt eine Seitenansicht des Klemmteils von Fig. 9A.
- Fig. 9C: zeigt eine Aufsicht des Klemmteils von Fig. 9A.
- Fig. 9D: zeigt eine Seitenansicht des Klemmteils von Fig. 9A.
- Fig. 10A: zeigt eine Ansicht eines Klemmteils einer Geberarmatur gemäß einer Ausführung der Erfindung von unten (d.h. aus der Richtung des Lenkerrohrs, an dem die Geberarmatur zu befestigen ist).
- Fig. 10B: zeigt eine Seitenansicht des Klemmteils von Fig. 10A.
- Fig. 10C: zeigt eine Aufsicht des Klemmteils von Fig. 10A.
- Fig. 10D: zeigt eine Seitenansicht des Klemmteils von Fig. 10A.
- Fig. 11: zeigt eine Innenansicht eines Gehäuses einer Geberarmatur gemäß einer Ausführung der Erfindung ohne Klemmteil und ohne Trennglied von oben.
- Fig. 12: zeigt eine Ansicht des Gehäuses der Geberarmatur von Figur 11 in Richtung des Zylinders ohne Kolben und ohne die den Kolbenraum verschließenden Teile.
- Fig. 13: zeigt eine Ansicht der Geberarmatur von Figur 11, wobei ein Teil des Gehäuses in Richtung des Ausgleichsbehälters ohne Klemmteil und Trennglied dargestellt ist.
- Fig. 14: zeigt eine perspektivische Ansicht des Trennglieds der Geberarmatur von Figur 11.
- Fig. 15: zeigt eine Seitenansicht des Trennglieds von Figur 14.
- Fig. 16: zeigt eine Ansicht des Trennglieds von Fig. 14 von unten, das heißt aus der Richtung des Gehäuses.
- Fig. 17: zeigt eine Seitenansicht des Trennglieds von Figur 14.
- Fig. 18: zeigt eine Schnittdarstellung einer Geberarmatur, einer hydraulischen Scheibenbremse gemäß der Erfindung.
- Fig. 19: zeigt eine Detailansicht im Bereich des Kreises XIX von Figur 18.
- Fig. 20: zeigt eine Schnittansicht einer Geberarmatur gemäß einer weiteren Ausführung der Erfindung für eine hydraulische Scheibenbremse.
- Fig. 21: zeigt eine Detailansicht im Bereich des Kreises XXI von Figur 20.
- Fig. 21A: zeigt eine Ansicht des Einstellglieds und des Druckstücks der Geberarmatur von Figur 20 aus der Richtung des Kolbens, wobei die übrigen Teile der Übersicht halber weggelassen sind.
- Fig. 22: zeigt eine Geberarmatur gemäß einer weiteren Ausführung der Erfindung einer hydraulischen Scheibenbremse.
- Fig. 23: zeigt eine Detailansicht im Bereich des Kreises XXIII von Figur 22.
- Fig. 24: zeigt eine perspektivische Ansicht der Geberarmatur von Figur 22.
- Fig. 25: zeigt eine Detailansicht im Bereich des Kreises XXV von Figur 24.
- Fig. 26: zeigt eine Seitenansicht der Geberarmatur von Figur 22.
- Fig. 27: zeigt eine Ansicht des Abstandsglieds der Geberarmatur von Figur 22 von unten.
- Fig. 28: zeigt eine Seitenansicht des Abstandsglieds von Figur 27.
- Fig. 29: zeigt eine Seitenansicht des Abstandsglieds von Figur 27.
- Fig. 30: zeigt eine perspektivische Darstellung der Bedienungseinrichtung der Druckpunkteinstell- vorrichtung der Geberarmatur von Figur 22.
- Fig. 31: zeigt eine Seitenansicht der Betätigungseinrichtung von Figur 30.
- Fig. 32: zeigt eine perspektivische Ansicht der Bedienungseinrichtung von Figur 30 von unten.
- Fig. 33: zeigt eine Seitenansicht der Betätigungseinrichtung von Figur 30.
- Fig. 34: zeigt eine Schnittansicht einer Geberarmatur einer weiteren Ausführung der Erfindung mit einer Sensoreinrichtung zur Erfassung der Stellung des Kolbens entlang der Linie XXXIV-XXXIV von Fig. 36.
- Fig. 35: zeigt eine Schnittansicht einer Geberarmatur gemäß einer weiteren Ausführung der Erfindung.
- Fig. 36: zeigt eine Schnittansicht der Geberarmatur von Fig. 34 entlang der Linie XLI-XLI von Fig. 34.
- Fig. 37: zeigt eine perspektivische Ansicht der Geberarmatur von Fig. 34.

In der Beschreibung der Ausführungsbeispiele werden folgende Bezugszeichen verwendet:
- 51: Klemmteil
- 52: Befestigungsabschnitt
- 53: Rahmen
- 54: Öffnung
- 55: Steg
- 56: Wölbung
- 57: Steg
- 58: Steg
- 59: Belüftungskanal
- 60: Belüftungskanal
- 200: Geberarmatur
- 210: Gebergehäuse
- 211: Ausgleichsraum
- 211A: Ausgleichsraumabschnitt
- 211B: Ausgleichsraumabschnitt
- 211C: Ausgleichsraumabschnitt
- 211D: Ausgleichsraumabschnitt
- 212A: Ausgleichsbohrung
- 212B: Ausgleichsbohrung
- 212C: Ausgleichsbohrung
- 212D: Ausgleichsbohrung
- 213: Steg
- 214: Rippe
- 215: Vertiefung
- 220: Kolbenraum
- 222A: Öffnung der Ausgleichsbohrung in den Kolbenraum
- 222B: Öffnung der Ausgleichsbohrung in den Kolbenraum
- 222C: Öffnung der Ausgleichsbohrung in den Kolbenraum
- 222D: Öffnung der Ausgleichsbohrung in den Kolbenraum
- 230: Balg
- 231A: Fortsatz
- 231B: Fortsatz
- 231C: Fortsatz
- 232D: Fortsatz
- 232: Rand
- 233: Fläche
- 234: Ausbuchtung
- 300: Geberarmatur
- 310: Hebel bzw. Bremshebel bzw. Kupplungshebel
- 311: Drehpunkt bzw. Bolzen
- 312: Bolzen
- 313: Feder
- 314: Mutter
- 320: Betätigungselement
- 321: Innenverzahnung
- 322: Verzahnung
- 323: Feder
- 330: Spindel
- 331: Kugelkopf
- 332: Bund
- 333: unterer Abschnitt
- 334: oberer Abschnitt
- 335: Verzahnung
- 340: Kolben
- 341: Aufnahme
- 342: Dichtung
- 343: Dichtung
- 344: Feder
- 350: Gehäuse der Geberarmatur
- 351: Klemmteil
- 352: Gegenstück
- 353: Befüllöffnung
- 354: Kanal
- 360: Ausgleichsraum
- 361: Ausgleichsraumabschnitt
- 362: Ausgleichsraumabschnitt
- 363: Steg
- 364: Balg
- 380: Rasthülse
- 381: Verzahnung
- 382: Außengewinde
- 400: Geberarmatur
- 410: Hebel bzw. Bremshebel bzw. Kupplungshebel
- 411: Drehpunkt bzw. Bolzen
- 420: Einstellvorrichtung für die Griffweite
- 421: Drehknopf
- 422: Abstandshalter
- 423: Bund
- 424: Fortsatz
- 425: Flansch
- 430: Spindel
- 431: Kopf
- 432: Bund
- 433: Hülse
- 434: Stift
- 435: Werkzeugeingriffabschnitt
- 436: Leerweg
- 440: Kolben
- 441: Aufnahme
- 442: Dichtung
- 443: Dichtung
- 444: Feder
- 450: Gehäuse
- 451: Klemmteil
- 452: Gegenstück
- 453: Befüllöffnung
- 454: Kanal
- 460: Ausgleichsraum
- 461: Ausgleichsraumabschnitt
- 462: Ausgleichsraumabschnitt
- 463: Steg
- 464: Balg
- 470: Druckstück
- 471: Fortsatz
- 472: Fortsatz
- 500: Geberarmatur
- 510: Hebel bzw. Bremshebel bzw. Kupplungshebel
- 511: Bolzen bzw. Drehpunkt
- 520: Einstellvorrichtung Kolbenanschlag
- 521: Anschlagteil (mit Gehäuse, drehfest)
- 522: Einstellteil (gegenüber Anschlagteil 521, verdrehbar)
- 523: Fortsatz
- 524: Betätigungsglied
- 525: Gewinde
- 526: Gewinde
- 527: Vorsprung
- 529: Stift
- 530: Spindel
- 540: Kolben
- 541: Aufnahme
- 542: Dichtung
- 543: Dichtung
- 544: Feder
- 545: Bund
- 550: Gehäuse
- 551: Klemmteil
- 552: Gegenstück
- 553: Befüllöffnung
- 555: Aufnahme
- 556: Rastierung
- 557: Bund
- 600: Geberarmatur
- 610: Hebel bzw. Bremshebel bzw. Kupplungshebel
- 611: Bolzen bzw. Drehpunkt
- 612: Bolzen
- 613: Feder
- 620: Einstellvorrichtung
- 621: Abstandsglied
- 622: Betätigungsglied
- 623: Hülse
- 629: Stift
- 630: Spindel
- 631: Kopf
- 639: Anschlag (beispielsweise Bund)
- 640: Kolben
- 641: Aufnahme
- 642: Dichtung
- 643: Dichtung
- 644: Feder
- 649: Abflachung bzw. Fläche
- 650: Gehäuse
- 651: Klemmteil
- 652: Gegenstück (beispielsweise Schelle)
- 653: Anschlag (für Bund (693) der Verbindungseinrichtung 690)
- 660: Ausgleichsraum
- 661: Ausgleichsraumsabschnitt
- 662: Ausgleichsraumsabschnitt
- 664: Balg
- 670: Druckstück
- 680: Sensoreinrichtung
- 681: Magnet (beispielsweise Stabmagnet)
- 682: Sensor (beispielsweise Reedkontakt bzw. Hallsensor)
- 688: Lenkerrohr
- 689: Bremsleitung
- 690: Verbindungseinrichtung
- 691: Stehbolzen
- 692: Gewindeabschnitt (zur Befestigung des Stehbolzens im Gehäuse 650)
- 693: Bund
- 694: Gewindeabschnitt (zur Befestigung von Verbindungsmitteln zur Befestigung des Gegenstücks 652 an dem Klemmteil 651 bzw. mit dem Gehäuse 650 an dem Lenkerrohr 688)
- 695: Spezialwerkzeugeingriff
- 696: Befestigungsmutter
- 700: Geberarmatur
- 710: Hebel bzw. Bremshebel bzw. Kupplungshebel
- 711: Bolzen bzw. Drehpunkt
- 712: Bolzen
- 720: Einstellvorrichtung
- 721: Werkzeugeingriffabschnitt
- 729: Stift
- 730: Spindel
- 731: Kopf
- 740: Kolben
- 741: Aufnahme
- 742: Dichtung
- 743: Dichtung
- 744: Feder
- 750: Gehäuse
- 751: Klemmteil
- 752: Gegenstück
- 760: Ausgleichsraum
- 764: Balg
- 780: Sensoreinrichtung
- 781: Magnet

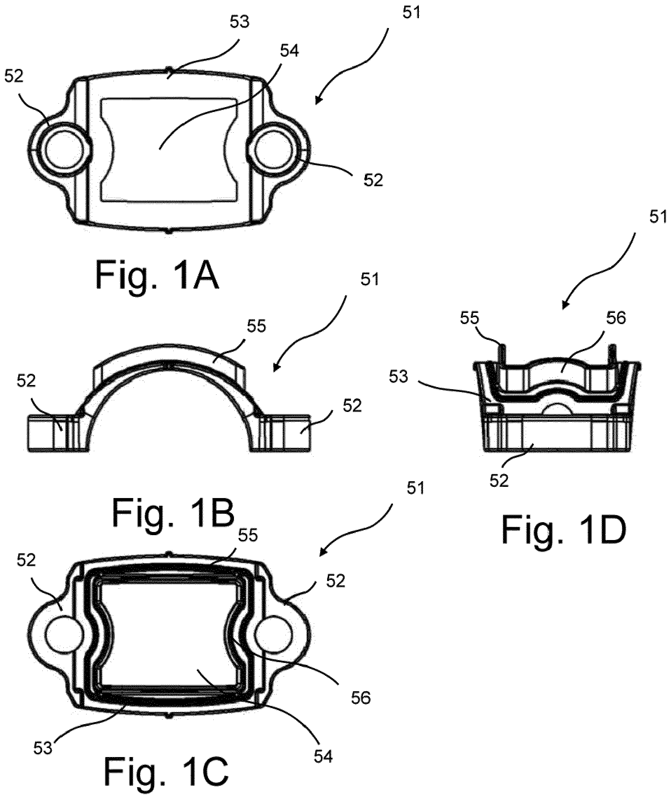

Die Figuren 1A bis 1D zeigen ein Klemmteil einer Geberarmatur gemäß einer Ausführung der Erfindung.

Das Klemmteil 51 weist an seinen beiden Seiten zwei Befestigungsabschnitte 52 auf, mit denen es an dem Gehäuse der Geberarmatur befestigt werden kann. Dabei klemmt es mit seinem Rahmen 53 ein Trennglied gegen das Gehäuse der Geberarmatur, das das Hydraulikmedium in dem Ausgleichsraum von einem Gasvolumen bzw. Ausgleichsvolumen trennt.

Das Klemmteil 51 weist innerhalb des Rahmens 53 einen Durchbruch bzw. eine Öffnung 54 auf. An dem Rahmen 53 ist ein Steg 55 zur Führung des Trennglieds vorgesehen. Im Bereich der Befestigungsabschnitte 52 sind Wölbungen 56 vorgesehen. Vorzugsweise kann das Klemmteil mit Schrauben an das Gehäuse der Geberarmatur geschraubt werden.

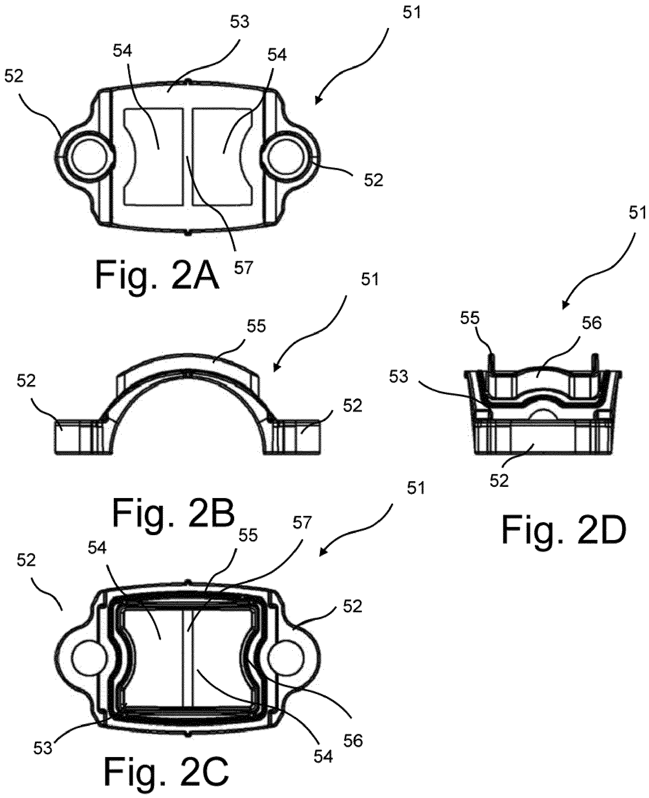

Die Figuren 2A bis 2D zeigen eine alternative Ausführung des in den Figuren 1A bis 1D gezeigten Klemmteils, das sich von diesem dahingehend unterscheidet, dass es einen Steg 57 aufweist, der derart angeordnet ist, dass innerhalb des Rahmens zwei Öffnungen 54 gebildet sind.

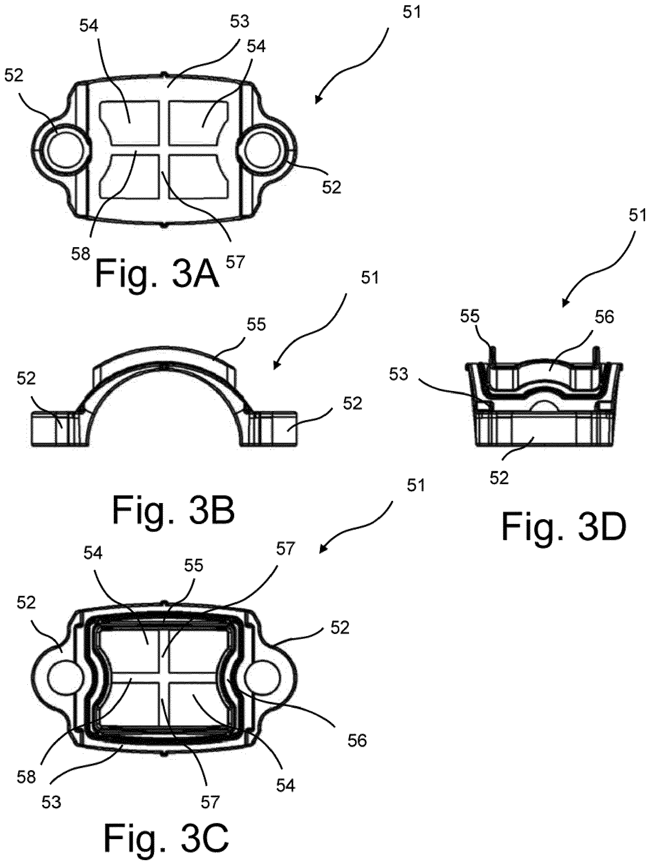

Die Figuren 3A bis 3D zeigen eine alternative Ausführung der in den Figuren 1A bis 2D gezeigten Klemmteile, das sich von denen dahingehend unterscheidet, dass es mehrere Stege 57, 58 aufweist, die im Wesentlichen senkrecht zueinander angeordnet sind, so dass innerhalb des Rahmens vier Öffnungen 54 gebildet sind.

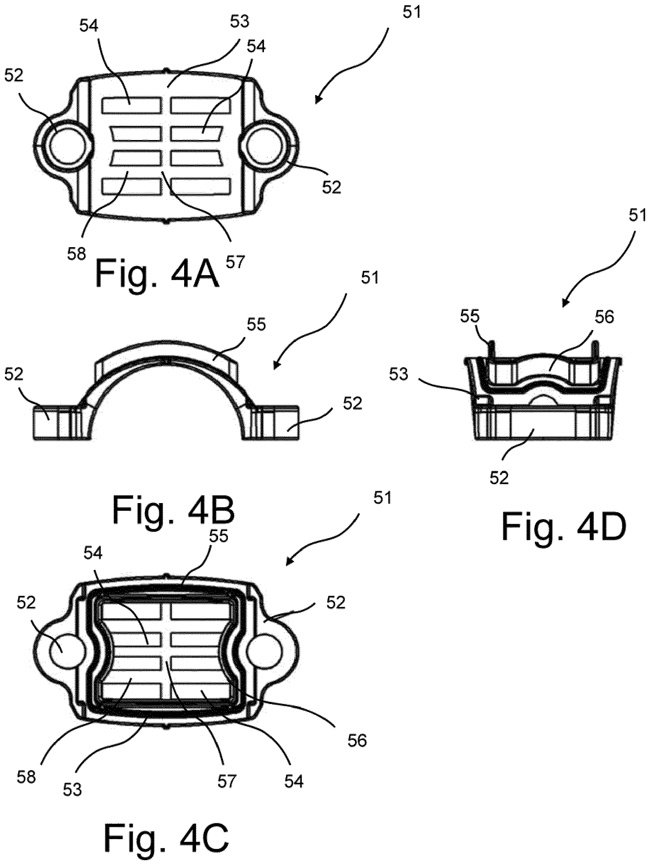

Die Figuren 4A bis 4D zeigen eine alternative Ausführung der in den Figuren 1A bis 3D gezeigten Klemmteile, das sich von denen dahingehend unterscheidet, dass es mehrere Stege 57, 58 aufweist, der im Wesentlichen gitterförmig angeordnet sind, so dass innerhalb des Rahmens mehrere Öffnungen 54 gebildet sind.

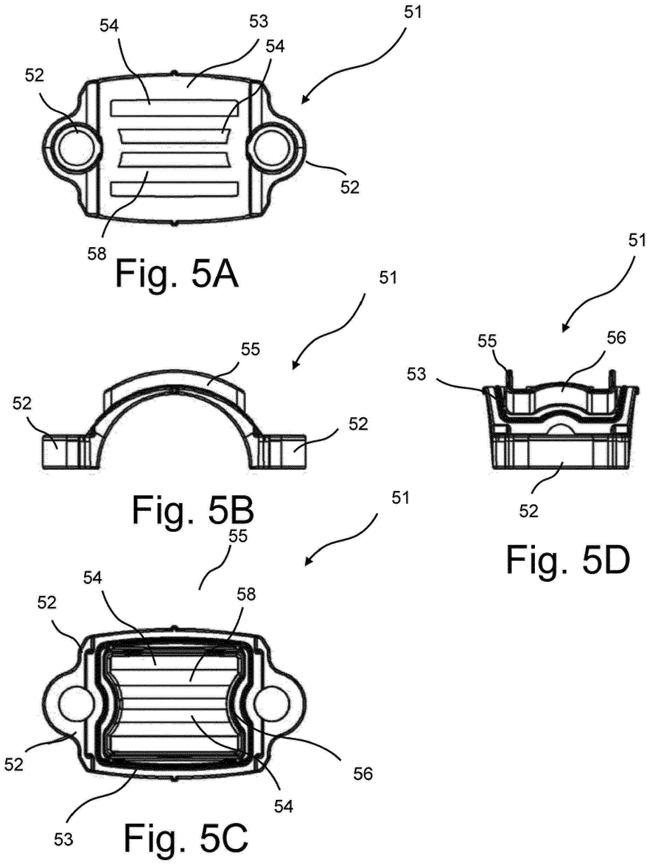

Die Figuren 5A bis 5D zeigen eine alternative Ausführung der in den Figuren 1A bis 4D gezeigten Klemmteile, das sich von denen dahingehend unterscheidet, dass es mehrere Stege 58 aufweist, der im Wesentlichen parallel zueinander angeordnet sind, so dass innerhalb des Rahmens vier Öffnungen 54 gebildet sind.

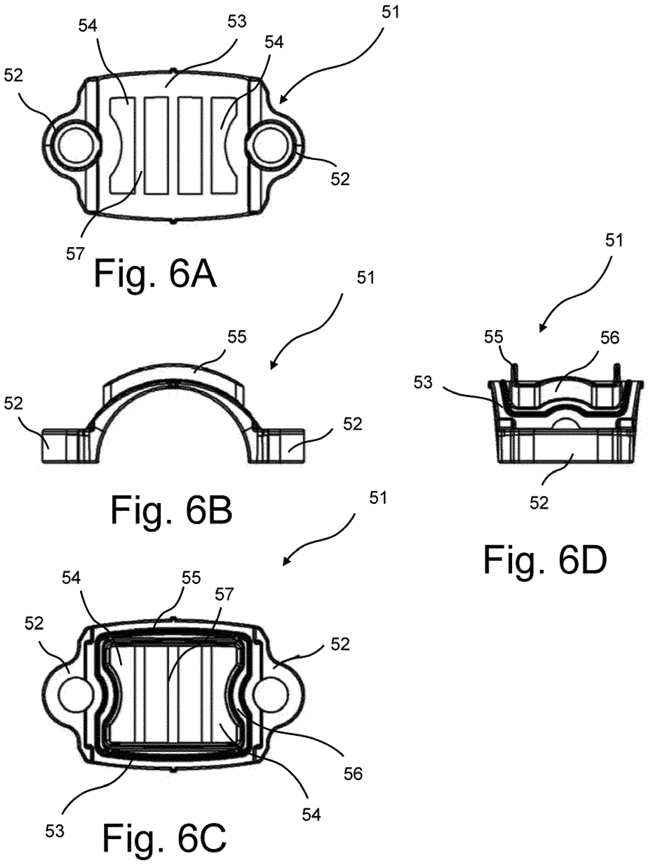

Die Figuren 6A bis 6D zeigen eine alternative Ausführung der in den Figuren 1A bis 5D gezeigten Klemmteile, das sich von denen dahingehend unterscheidet, dass es mehrere Stege 57 aufweist, der im Wesentlichen parallel zueinander angeordnet sind, so dass innerhalb des Rahmens vier Öffnungen 54 gebildet sind.

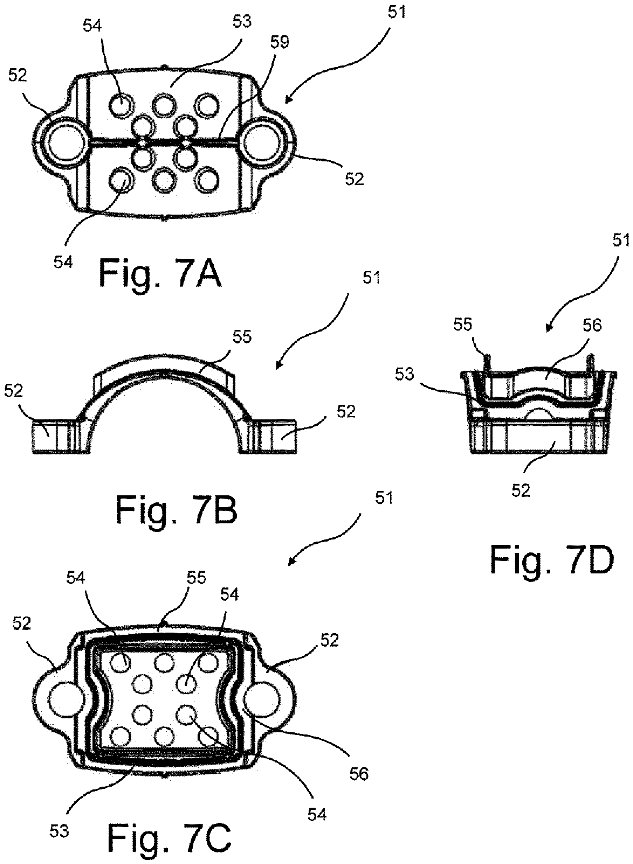

Die Figuren 7A bis 7D zeigen eine alternative Ausführung der in den Figuren 1A bis 6D gezeigten Klemmteile, das sich von denen dahingehend unterscheidet, dass in dem Klemmteil 51 mehrere Öffnungen 54 ausgebildet sind. Des Weiteren sind in dem Klemmteil zwei Belüftungskanäle 59 vorgesehen, um eine gute Verbindung des Ausgleichsraums mit der Umgebung sicherzustellen.

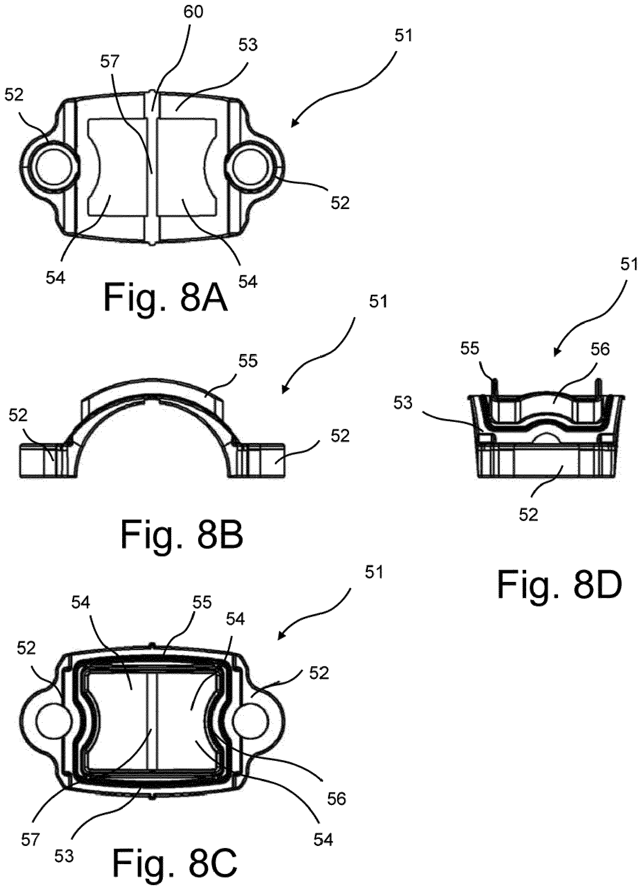

Die Figuren 8A bis 8D zeigen eine alternative Ausführung der in den Figuren 1A bis 7D gezeigten Klemmteile, das sich von denen dahingehend unterscheidet, dass es einen Steg 57 aufweist, der derart angeordnet ist, dass innerhalb des Rahmens zwei Öffnungen 54 gebildet sind, und dass es in dem Rahmen 53 zwei Belüftungskanäle 60 aufweist, um eine gute Verbindung des Ausgleichsraums mit der Umgebung sicherzustellen.

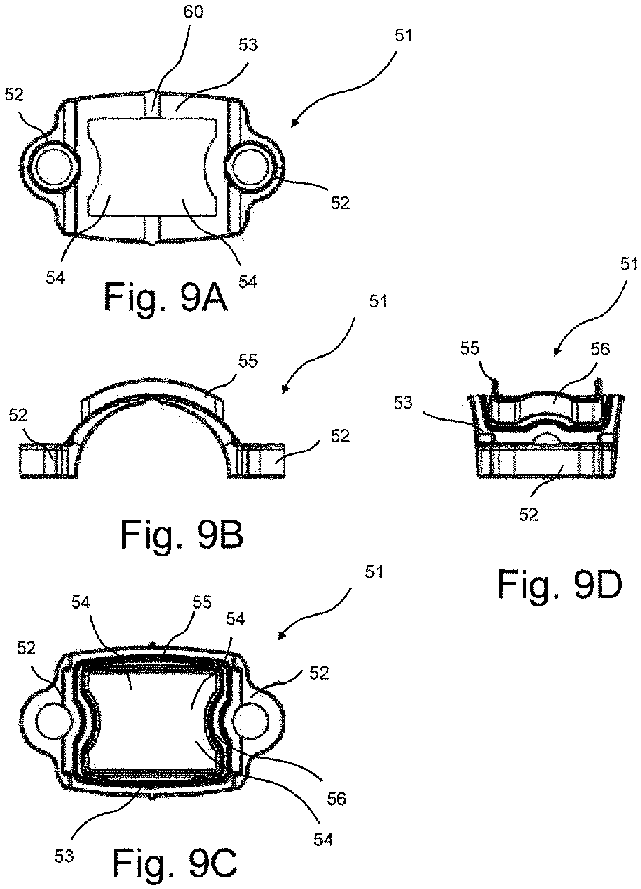

Die Figuren 9A bis 9D zeigen eine alternative Ausführung der in den Figuren 1A bis 8D gezeigten Klemmteile, das sich von denen dahingehend unterscheidet, dass es in dem Rahmen 53 zwei Belüftungskanäle 60 aufweist, um eine gute Verbindung des Ausgleichsraums mit der Umgebung sicherzustellen.

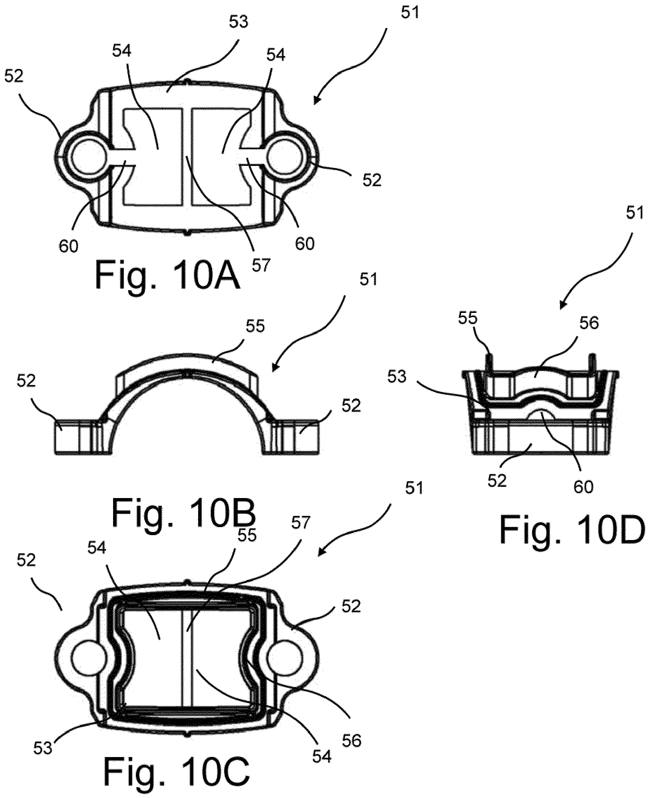

Die Figuren 10A bis 10D zeigen eine alternative Ausführung der in den Figuren 1A bis 9D gezeigten Klemmteile, das sich von denen dahingehend unterscheidet, dass es einen Steg 57 aufweist, der derart angeordnet ist, dass innerhalb des Rahmens zwei Öffnungen 54 gebildet sind, und dass es in dem Rahmen 53 zwei Belüftungskanäle 60 aufweist, um eine gute Verbindung des Ausgleichsraums mit der Umgebung sicherzustellen. Bei dieser Ausführung kann der Rahmen 53 bei den Belüftungskanälen vollständig unterbrochen sein, weil eine Verbindung des Rahmens noch über den Steg 57 erfolgt. Außerdem kann eine hinreichende Klemmwirkung beispielsweise durch in den Befestigungsabschnitten 52 vorgesehene Schrauben erreicht werden. Vorzugsweise kann dabei das zwischen das Gehäuse der Geberarmatur und das Klemmteil zu klemmende Trennglied entsprechend ausgebildete Verdickungen bzw. Verstärkungen aufweisen.

Die folgenden Figuren zeigen verschiedene Ausführungen von erfindungsgemäßen Geberarmaturen, die beispielsweise mit einem Klemmteil gemäß einem der in den Figuren 1A bis 10D gezeigten Klemmteile ausgebildet sein können. In den folgenden Figuren ist das Klemmteil jeweils nur schematisch dargestellt und wegen der Einzelheiten wird auf die Darstellungen der in den Figuren 1A bis 10D gezeigten beispielhaften konkreten Ausführungen verwiesen.

Alternativ kann das Trennglied auch wie oben beschreiben und in den Ansprüchen beansprucht direkt zwischen das Lenkerrohr und das Gehäuse bei der Befestigung des Gehäuses an dem Lenkerrohr geklemmt werden. Dabei kann das Trennglied vorher an das Gehäuse geklebt sein. Alternativ oder zusätzlich kann das Trennglied in das Gehäuse beispielsweise mit einer Nut-Feder-Verbindung geklemmt sein. Ebenso kann ein Klemmteil mit einer Klebe- und/oder Klemmverbindung mit dem Gehäuse der Geberarmatur verbunden sein, um das Trennglied mit dem Gehäuse zu verbinden, damit in dem Ausgleichsraum eine Trennung zwischen dem Hydraulikmedium und der Umgebung erfolgen kann.

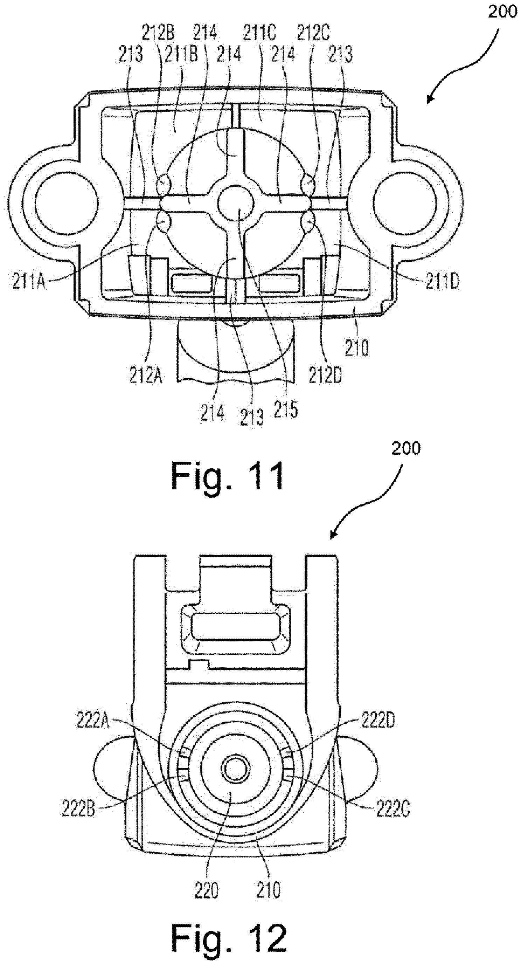

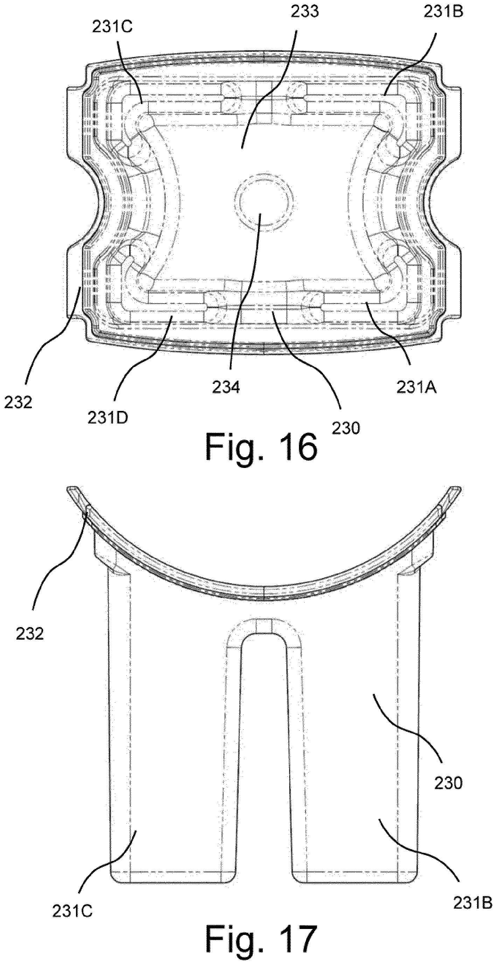

Die Figuren 11 bis 17 zeigen Details einer Geberarmatur gemäß der Erfindung, wobei der Schwerpunkt auf die Ausgestaltung des Ausgleichsraums 211A, 211B, 211C, 211D und das als Balg ausgebildete Trennglied 230 gelegt wird.

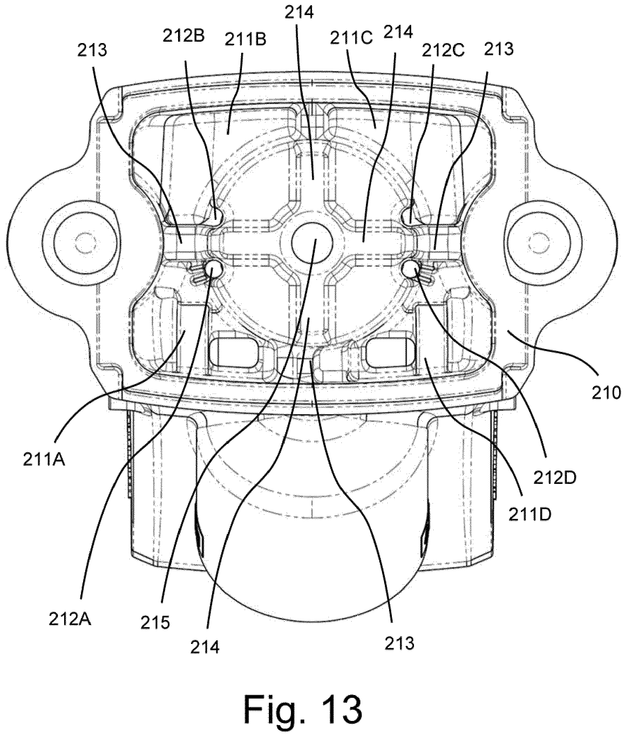

Der Ausgleichsraum ist in vier Abschnitte 211A, 211B, 211C und 211D unterteilt, die in dem Gehäuse 210 der Geberarmatur um den Kolbenraum 220 herum angeordnet sind. Mittig in dem Gehäuse der Geberarmatur ist der Kolbenraum 220 angeordnet, in dem ein nicht dargestellter Kolben verschiebbar angeordnet ist. Der Kolbenraum 220 weist an der Zylinderwand vier Öffnungen 222A, 222B, 222C, 222D auf, die über Ausgleichsbohrungen 212A, 212B, 212C, 212D mit jeweils einem Ausgleichsraumabschnitt 211A, 211B, 211C, 211D verbunden sind, um eine Verbindung zwischen dem Druckraum und dem Ausgleichsraum zu schaffen, solange der Kolben mit seiner Dichtung (beides nicht dargestellt) die Öffnungen 222A bis 222D nicht überfahren hat. Die den Kolbenraum 220 begrenzende zylinderförmige Wand ist mit Stegen 213 mit der Wand des Gehäuses der Geberarmatur verbunden. Dadurch ergibt sich eine höhere Steifigkeit. Anstelle der Stege 213 könnten auch Rippen oder Brücken oder andere Versteifungselemente vorgesehen werden. Wenn diese Elemente nicht bis zu dem Boden des Ausgleichsraums (die in Figur 11 bzw. in Figur 13 dargestellte untere Ebene) reichen, kann auch nur eine Ausgleichsbohrung vorgesehen werden, weil am Boden des Ausgleichsraums eine Verbindung zum Austausch des hydraulischen Mediums geschaffen ist.

Auf der den Kolbenraum 220 abschließenden Stirnwand sind Rippen 214 ausgebildet, die im Wesentlichen kreuzförmig angeordnet sind. Diese Rippen 214 dienen der Versteifung und können gegebenenfalls weggelassen werden.

In der Mitte des durch die Rippen 214 gebildeten Kreuzes ist eine Vertiefung 215 vorgesehen, in die eine Ausbuchtung 234 des Balgs 230 eingreifen kann.

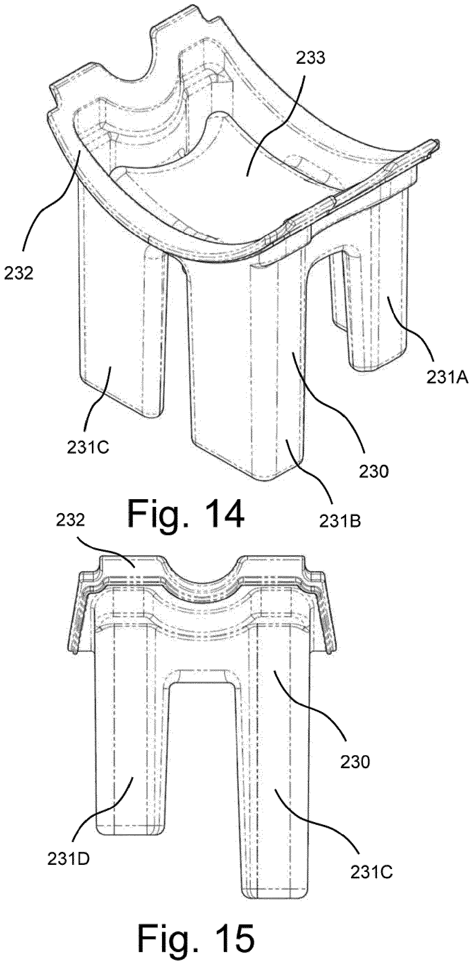

Der Balg (bzw. das Trennglied) 230 ist in den Figuren 14 bis 17 dargestellt. Der Balg 230 weist vier Fortsätze 231A, 231B, 231C, 231D auf, die sich von einer Fläche 233 nach unten erstrecken. Die Fortsätze umfassen im Wesentlichen L-förmige Säulen, die derart ausgebildet sind, dass sie das um den Kolbenraum zur Verfügung stehende Volumen möglichst optimal ausnutzen. Der Balg 230 weist einen umlaufenden Rand 232 auf, der entsprechend dem Rand des Gehäuses der Geberarmatur geformt ist, damit er mit einem Klemmteil, wie beispielsweise in den Figuren 1A bis 10D gezeigt, gegenüber dem Gehäuse abgedichtet werden kann, um einen nach außen abgedichteten Ausgleichsraum zu schaffen, dessen Volumen durch Verformung des Balgs an die in dem Ausgleichsraum vorhandene Menge an hydraulischem Fluid angepasst werden kann.

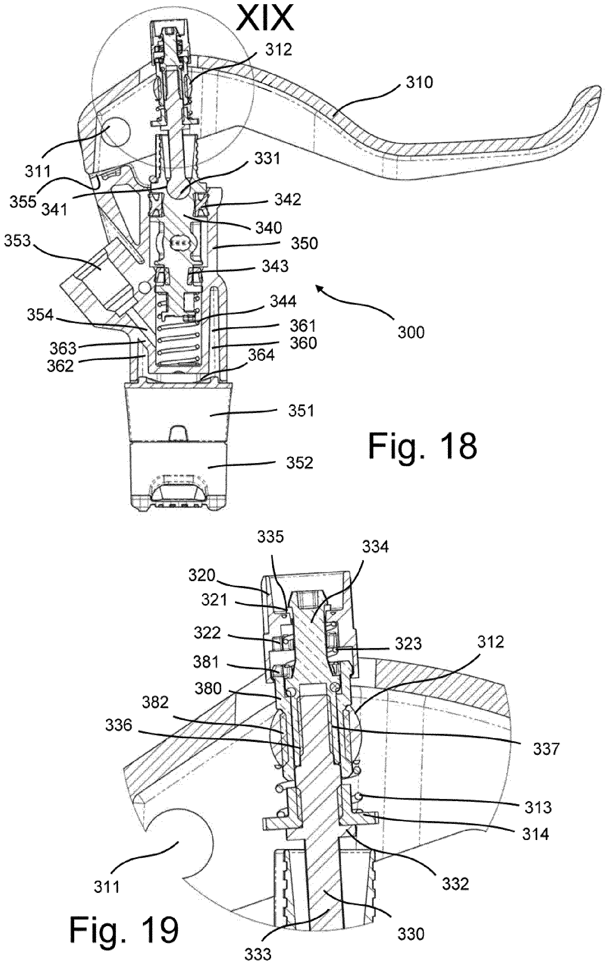

Die Figuren 18 und 19 zeigen eine Geberarmatur 300 einer hydraulischen Scheibenbremse gemäß der Erfindung. Die Geberarmatur 300 weist einen Bremshebel 310 auf, der über einen Bolzen 311 drehbar an dem Gehäuse der Geberarmatur gelagert ist. Die Geberarmatur weist ein Gehäuse 350 auf, das über das Klemmteil 351 und eine Schelle 352, die das Lenkerrohr aufnehmen bzw. umschließen, an dem Lenkerrohr befestigbar ist. Das Lenkerrohr selbst ist bei diesem Ausführungsbeispiel nicht dargestellt. In dem Kolbenraum der Geberarmatur ist ein Kolben 340 auf bekannte Weise verschiebbar angeordnet. Der Kolben 340 ist über Dichtungen 342 und 343 gegenüber der Zylinderwand abgedichtet.

Die Einstellvorrichtung weist einen Knopf 320 auf, der auf einer Spindel 330 angeordnet ist. Die Spindel 330 ist mit dem Kolben 340 verbunden. Die Spindel 330 weist einen Kopf 331 auf, der fest in eine Aufnahme 341 des Kolbens 340 eingerastet ist, derart, dass eine axiale Bewegung der Spindel 331 nicht möglich ist, während die Spindel 330 sich gegen den Kolben 340 verkippen kann, was bei der Betätigung der Geberarmatur notwendig ist. Die Spindel 330 weist einen Bund 332 auf. Die Spindel 330 ist zweiteilig ausgeführt und weist einen dem Kolben näheren Teil 333 (unteres Teil) und einen mit dem Betätigungsknopf 320 der Einstellvorrichtung verbundenen äußeres Teil (oberes Teil) 334 auf. Das obere Spindelteil 334 ist mit dem unteren Spindelteil 333 über eine Gewindeverbindung miteinander verbunden, d.h., dass die Länge der Spindel 330 bei Verdrehen des oberen Teils 334 gegen den unteren Teil 333 größer bzw. kleiner wird. Der obere Teil 334 der Spindel weist eine Außenverzahnung 335 auf, die in der in Figur 19 gezeigten Stellung des Knopfes 320 mit einer Innenverzahnung 321 in Eingriff ist. Durch Drehen des Knopfes 320 dreht sich somit der äußere Teil 334 der Spindel 330 wegen des Eingriffs der Verzahnung 321 mit der Verzahnung 335. Somit dreht sich das äußere Teil 334 mit seinem Innengewinde 336 auf dem Außengewinde 337 des inneren Teils 333 der Spindel 330. Dadurch verändert sich die Länge der Spindel und somit die Lage des Kolbens 340 in dem Kolbenraum. Dadurch kann der Druckpunkt bzw. der Leerweg, d.h. der Weg des Kolbens 340, den der Kolben 340 in dem Zylinder zurücklegen muss, damit die Dichtung 343 die Ausgleichsbohrung überfährt, verändert werden.

Die Geberarmatur weist ferner eine Rasthülse 380 auf, die mit einem Außengewinde 382 in einen in einer Aufnahme aufgenommenen Bolzen 312 eingeschraubt ist. Die Rasthülse 360 weist eine stirnwandige Verzahnung 381 auf. Der Knopf 320 der Einstellvorrichtung weist eine Verzahnung 322 auf, die durch Drücken des Knopfes 320 in Richtung des Kolbens mit der stirnseitigen Verzahnung 361 der Rasthülse 360 in Eingriff bringbar ist. Durch Drücken des Knopfes 320 kann somit durch Drehen des Knopfes 320 in Folge des Eingriffs der Verzahnung 322 mit der Verzahnung 361 die Rasthülse 360 in dem Bolzen 312 verdreht werden, so dass die Griffweite verstellt werden kann. In dem Knopf 320 ist eine Feder 323 vorgesehen, die den Knopf 320 nach außen vorspannt. Durch diese Vorspannung ist gewährleistet, dass die Einstelleinrichtung immer in der Stellung zum Verstellen des Leerwegs bzw. des Druckpunkts ist, wenn nicht aktiv auf den Knopf 320 gedrückt wird.

Zur Einstellung der Griffweite muss der Knopf 320 aktiv in Richtung des Kolbens 340 gedrückt werden, und die Feder 322 gewährleistet, dass der Knopf 320 nach erfolgter Griffweiteneinstellung wieder in seine ursprüngliche Lage zurückspringt, in der der Leerweg bzw. Druckpunkt eingestellt werden kann.

Die Geberarmatur 300 weist eine Feder 313 auf, die den Hebel 310 in seine Ruhestellung vorspannt, das heißt um den Drehpunkt 311 gegen den Anschlag 355 des Gehäuses. Dadurch wird die Aufnahme für den Bolzen 312 nach außen gespannt. Die Feder 313 stützt sich an dem äußeren Teil 334 der Spindel 330 und auf der gegenüberliegenden Seite an einer Mutter 314 ab, die gegen ein Verdrehen gesichert ist.

In dem Gehäuse 350 der Geberarmatur ist ein Ausgleichsraum 360 vorgesehen, der mehrere Sektoren aufweist. Dargestellt ist der auf der der Befüllöffnung 353 gegenüberliegenden Seite angeordnete Abschnitt 361. Auf der diesem Abschnitt gegenüberliegenden Seite ist der Übergangsbereich 362 zwischen zwei nicht dargestellten Abschnitten des Ausgleichsraums dargestellt, die durch einen Steg 363 getrennt sind, durch die der Kanal 354 läuft. Zwischen dem Klemmteil 351 und dem Gehäuse 350 ist ein Trennglied bzw. ein den Ausgleichsraum 360 begrenzender Balg 364 angeordnet. Gemäß einer Ausführung der Erfindung kann der Balg beispielsweise wie in den Figuren 13 bis 17 gezeigt ausgebildet sein. Bei der vorliegenden Ausführung der Figuren 18 und 19 weist der Ausgleichsraum 360 drei Ausgleichsraumabschnitte auf, das heißt den Ausgleichsraumabschnitt 361, der der Befüllöffnung 353 gegenüberliegt und über zwei Stege von zwei weiteren Abschnitten getrennt ist, die im wesentlichen symmetrisch zu der Befüllöffnung 353 angeordnet sind. Die Ausgleichsräume erstrecken sich jeweils über ungefähr 120°. Alternativ können sich die Ausgleichsräume auch über unterschiedliche Winkelbereiche um den Kolbenraum herumstrecken. Beispielsweise könnte der der Befüllöffnung 353 gegenüberliegende Ausgleichsraum sich über 180° erstrecken, und die an den Seiten des der Befüllöffnung bzw. des Kanals 354 angeordneten Ausgleichsräume könnten sich über ungefähr jeweils 90° erstrecken, wobei der Winkelbereich um das Maß der die Ausgleichsraumabschnitte trennenden Stege reduziert sein müsste.

Die Geberarmatur 300 ist mit dem Klemmteil 351 und dem Gegenstück 352 an dem nicht dargestellten Lenker befestigt. Zur Erleichterung der Montage kann das Gegenstück 352 einen Winkelbereich von weniger als 180° aufweisen, der das Lenkerrohr einschließt, und das Klemmteil 351 kann einen Winkelbereich einschließen, der mehr als 180° umfasst. Das hat den Vorteil, dass die Geberarmatur 300 auf das Lenkerrohr aufgedrückt werden kann, so dass eine einfache und leichte Montage erfolgen kann.

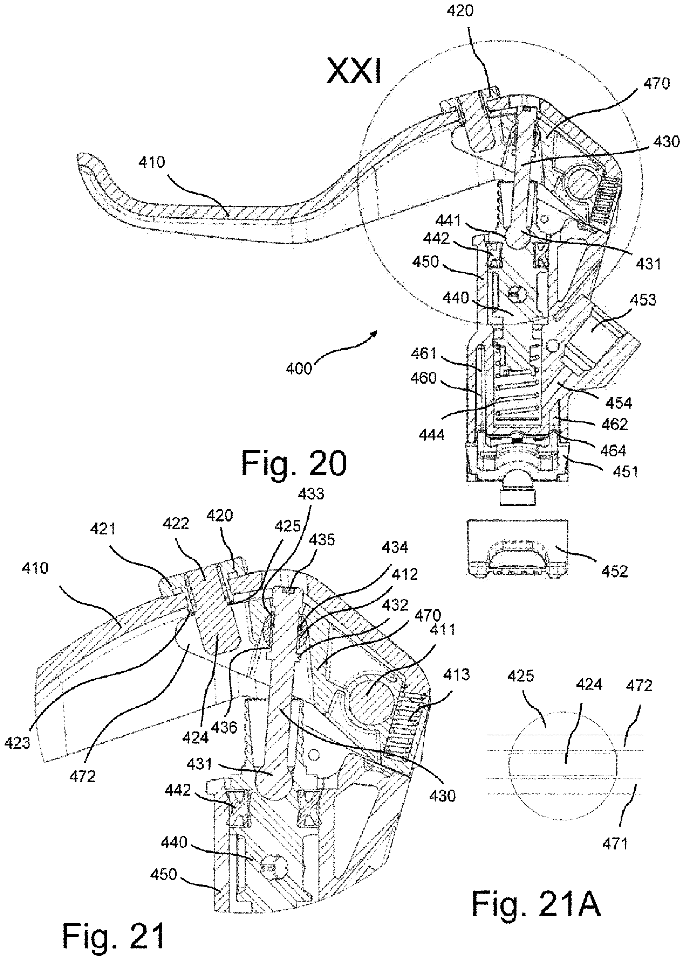

Die Figuren 20 bis 21A zeigen eine weitere Ausführung einer Geberarmatur einer erfindungsgemäßen hydraulischen Bremse oder Kupplung. Die gleichen Bauteile sind mit entsprechenden Bezugszeichen bezeichnet, die um 100 gegenüber der Ausführung der Figuren 18 bis 19 erhöht sind. Im Folgenden werden nur die Unterschiede beschrieben und im übrigen auf die Beschreibung der anderen Ausführungsbeispiele und insbesondere die Beschreibung des Ausführungsbeispiels der Figuren 18 und 19 verwiesen. Das Ausführungsbeispiel der Figuren 20 bis 21A unterscheidet sich von dem Ausführungsbeispiel in den Figuren 18 und 19 durch eine unterschiedliche Einstellvorrichtung, die ein getrenntes Betätigungsglied für die Einstellung der Griffweite und die Einstellung des Druckpunkts aufweist. Der Hebel 410 ist um einen Bolzen 411 drehbar gelagert. Dazu ist ein Druckstück 470 vorgesehen, das um den Bolzen 411 drehbar gelagert ist. Der Hebel 410 stützt sich an dem Druckstück 470 über eine Einstellvorrichtung für die Griffweite ab. Zwischen dem Druckstück 470 und dem Hebel 410 ist eine Feder 413 vorgesehen, die den Hebel 410 bei der Einstellvorrichtung gegen das Druckstück 470 vorspannt. Die Einstellvorrichtung für die Griffweite 420 weist einen Drehknopf 421 auf, der in dem Hebel 410 um seine Achse drehbar gelagert ist. In Position wird er durch einen Bund 423 gehalten. Ein Abstandshalter 422 ist in dem Drehknopf 421 angeordnet. Im Bereich des Drehknopfs 421 weist er ein Außengewinde auf, das mit einem Innengewinde des Drehknopfs 421 verbunden ist. Das Druckstück 470 weist im Bereich des Einstellknopfs bzw. Abstandhalters 422 zwei voneinander beabstandete Fortsätze 471, 472 auf, zwischen denen sich ein Fortsatz 424 des Abstandshalters 423 erstreckt. Zwischen dem Gewindeabschnitt und dem Fortsatz 424 ist ein Flansch 425 vorgesehen, der bei der dargestellten Ausführung eine im Wesentlichen kreisförmige Form aufweist. Mit dem Flansch stützt sich die Einstellvorrichtung auf dem Druckstück ab. Da der Drehknopf 421 in axialer Richtung fest mit dem Hebel 410 verbunden ist, stützt sich somit der Hebel 410 über den Knopf 421 und den Abstandshalter 422 und dem Flansch 425 auf dem Druckstück 470 ab.

Figur 21A zeigt eine Ansicht des Abstandshalters 422 und eines Teils des Druckstücks der Geberarmatur 400 von Figur 20 aus der Richtung des Kolbens 340, wobei die übrigen Teile der Übersicht halber weggelassen sind.

Zur Verstellung der Griffweite wird der Drehknopf 421 gegenüber dem zwischen den beiden Fortsätzen 471, 472 des Drehstück 470 drehfest gehaltenen Abstandshalter 422 verdreht, so dass die relative Lage zwischen Drehknopf 421 und dem Abstandshalter 423 verschoben wird. Dadurch verstellt sich die Griffweite.

Die Ausführung gemäß den Figuren 20 bis 21A weist ferner eine Einstellvorrichtung für den Leerweg bzw. Druckpunkt auf. Dazu wird die Spindel 430 in einer Hülse 433 verdreht, die über Stifte 434 drehfest mit einem Bolzen 412 verbunden ist, der in der Aufnahme des Druckstücks 470 angeordnet ist. Zur Verdrehung weist die Spindel 430 einen Werkzeugeingriffabschnitt 435 auf. Durch Drehen der Spindel 430 wird somit der Abstand zwischen der Hülse 433 und dem Bund 432 verstellt, der den Leerweg 436 definiert.

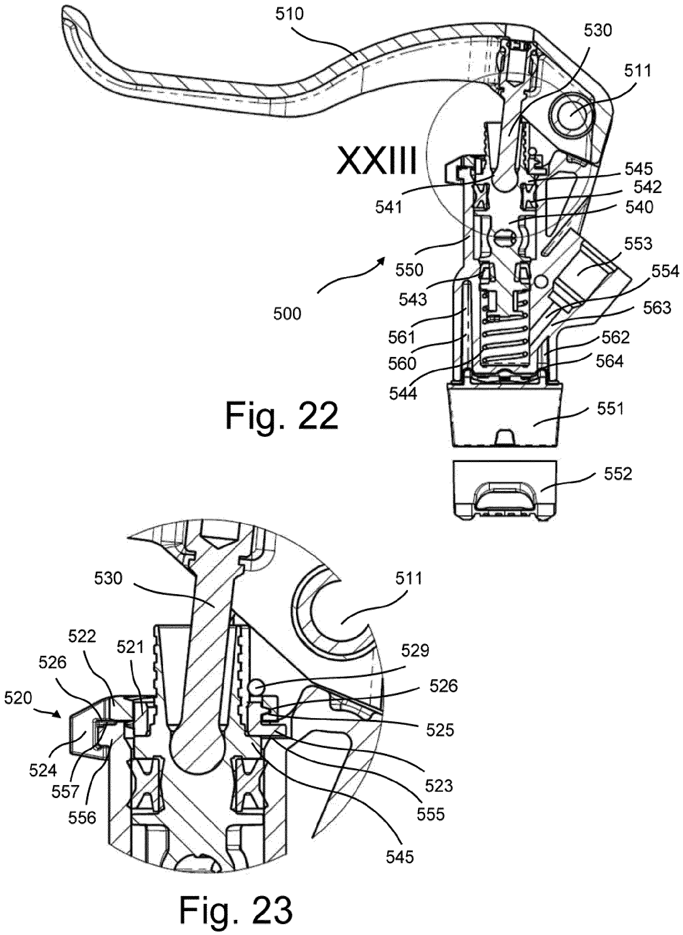

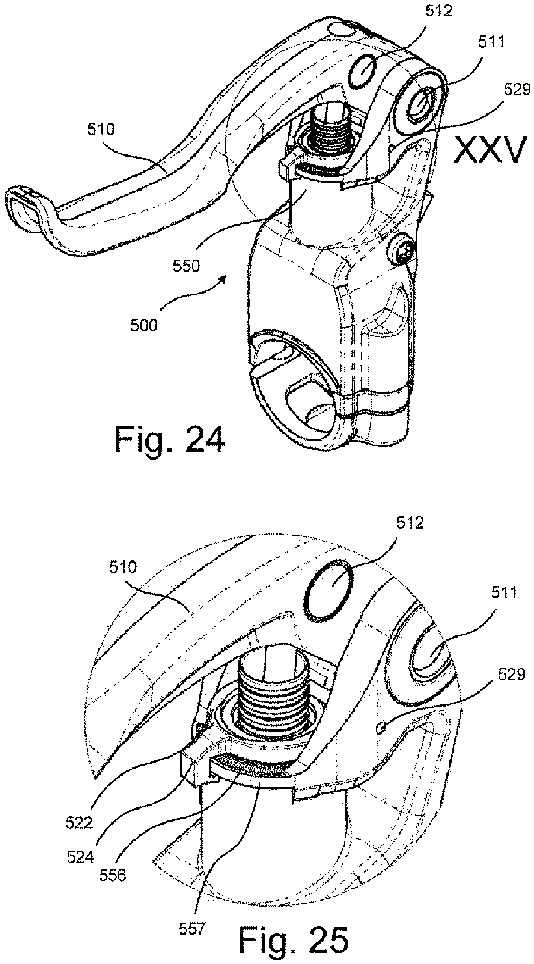

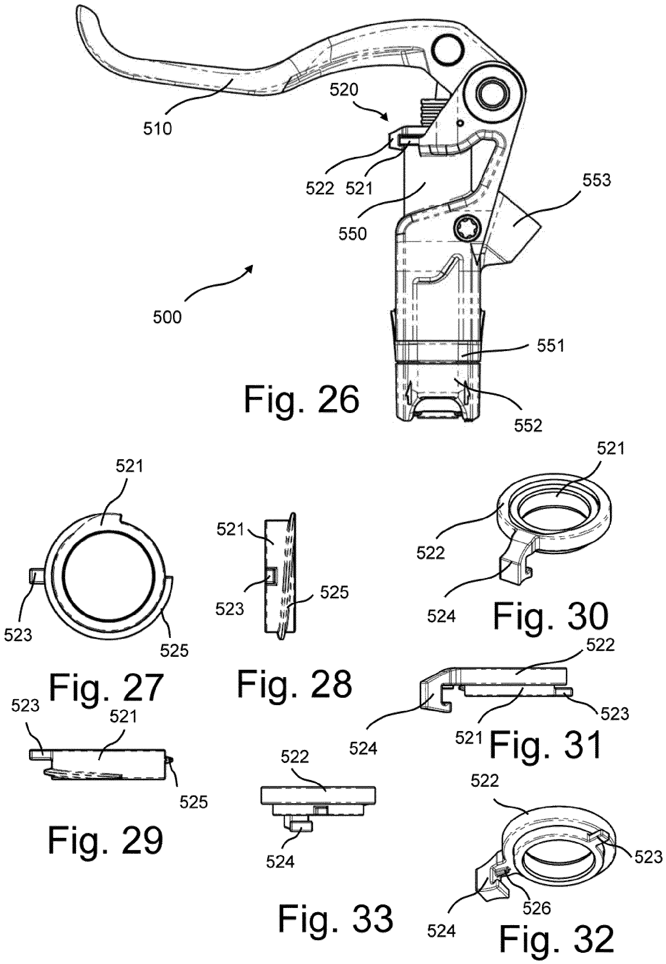

Die Figuren 22 bis 32 zeigen eine weitere Ausführung einer Geberarmatur einer hydraulischen Bremse oder Kupplung gemäß der vorliegenden Erfindung. Die Ausführungsform der Figuren 22 bis 33 entspricht im Wesentlichen den Ausführungsformen, die in Figuren 18 bis 19 bzw. 20 bis 21A gezeigt und beschrieben sind. Gleiche Bauteile werden mit gleichen Bezugszeichen bezeichnet, die gegenüber der Ausführungsform der Figuren 18 bis 19 um 200 bzw. gegenüber der Ausführungsform der Figuren 20 bis 21A um 100 erhöht sind. Im Folgenden wird nur der Unterschied zu den Ausführungsformen, die in den Figuren 18 bis 19 bzw. 20 bis 21A gezeigt sind, beschrieben. Außerdem wird auf die übrige Beschreibung und insbesondere die Beschreibung der Ausführungsbeispiele der Figuren 18 bis 19 und 20 bis 21A verwiesen.

Die in den Figuren 22 bis 33 beschriebene Geberarmatur gemäß einer Ausführung der Erfindung kann in Verbindung mit einer hydraulischen Bremse oder hydraulischen Kupplung verwendet werden, vorzugsweise bei einem lenkergeführten Fahrzeug, beispielsweise einem Fahrrad oder Motorrad.

Die in den Figuren 22 bis 33 dargestellte Geberarmatur weist eine Einstellvorrichtung 520 zur Verstellung des Endanschlags des Kolbens 540 auf. Der Kolben 540 ist in einer Zylinderbohrung in dem Gehäuse 550 verschiebbar aufgenommen. In einer Aufnahme 541 ist ein Kopf 531 einer Spindel 530 eingerastet. Die Spindel ist mit einem Hebel 510 verbunden, der um einen Bolzen 511 drehbar gelagert ist. Der Kolben 540 weist einen Bund 545 auf, der die Endlage des Kolbens in der Geberarmatur durch seinen Anschlag gegen die Einstellvorrichtung 520 definiert.

Die Einstellvorrichtung 520 weist ein Anschlagteil 521 auf, das einen Fortsatz 523 umfasst, der in eine Aufnahme 555 des Gehäuses 550 eingreift. Das Anschlagteil 521 ist drehfest in dem Gehäuse 550 angeordnet. Der Fortsatz 523 ist dazu in der Aufnahme 555 des Gehäuses 550 aufgenommen. Die dem Bund 545 des Kolbens 540 gegenüberliegende Seite des Anschlagsteils 521 dient dabei als Anschlagfläche, die Drehlage bzw. die Orientierung des Kolbens 540 in dem Gehäuse 550 der Geberarmatur 500 definiert. In den Figuren ist der Kolben 540 in seiner Endlage dargestellt, das heißt, dass der Kolben 540 mit dem Bund 545 an dem Anschlagteil 521 anliegt. Der Fortsatz 523 ist derart in der Aufnahme 555 angeordnet, dass er sich in axialer Richtung des Kolbens aber nicht in Umfangsrichtung des Kolbens bewegen kann. Das Anschlagsglied 521 weist einen Flansch mit einem Außengewinde 525 auf. Das Außengewinde umfasst eine Windung von ungefähr einer Dreiviertelumdrehung, das heißt weniger als einen Gewindegang. Die Einstellvorrichtung 520 umfasst des Weiteren ein Betätigungsglied 522, das ein dem Außengewinde 525 entsprechendes Innengewinde 526 aufweist, in dem das Außengewinde des Anschlagsglieds aufgenommen ist. Das Einstellglied 522 umfasst ein Betätigungselement 524, an dem der Benutzer angreifen kann, um das Einstellglied relativ zu dem Anschlagglied 521 um die Achse des Kolbens zu verdrehen. Dadurch verändert sich die relative Lage des Anschlagsglieds in dem Einstellglied 522, die die Endlage des Kolbens 540 definiert.

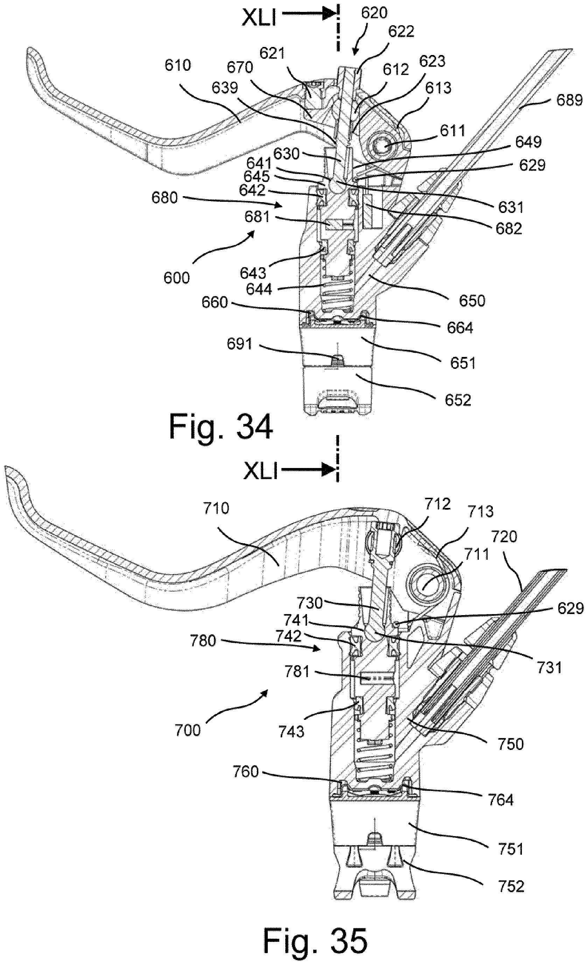

Das Einstellglied 522 hintergreift mit dem Betätigungsglied 524 einen Bund 557 des Gehäuses. Auf der gegenüberliegenden Seite ist das Einstellglied durch einen Stift 529 entgegen der Betätigungsrichtung bei Betätigung der Geberarmatur 500 gesichert. Der Stift 529 ist in dem Gehäuse gelagert. Im Bereich des Stiftes 529 kann der Kolben auch eine Abflachung aufweisen (wie bei der Ausführung gemäß Figuren 34, 41 und 42 gezeigt), so dass der Kolben 540 in einer eindeutigen Drehlage in dem Gehäuse 550 angeordnet ist, so dass die Erfassung der Stellung des Kolbens 540 erleichtert werden kann.

Das Einstellglied 522 weist einen Vorsprung 526 auf, der in eine auf dem Bund 557 vorgesehene Rastierung 556 eingreift, um eine ungewollte Verstellung der Einstellvorrichtung zu verhindern. Zur Betätigung der Einstellvorrichtung 520 ist eine Kraft notwendig, die ausreichend ist, um den Vorsprung 526 über die Rastierung 556 zu bewegen. Durch Verdrehen des Einstellglieds 521 um die Achse des Kolbens 540 wird das Gewinde zwischen dem Einsteckglied 522 und dem Abstandsglied 521 verdreht, so dass sich das Abstandsglied 521 gegenüber dem Einsteckglied 522 und damit gegenüber dem Stift 529 und dem Bund 557, das heißt gegenüber dem Gehäuse 550 in axialer Richtung des Kolbens bewegt, so dass die Endlage des Kolbens 540 verändert wird.

Die Figuren 34 und 35 zeigen weitere Ausführungen einer Geberarmatur einer hydraulischen Bremse oder Kupplung gemäß der vorliegenden Erfindung.

Die Ausführungsform der Figur 34 entspricht insbesondere im Wesentlichen der Ausführungsform, die in Figuren gezeigt und beschrieben ist. Gleiche Bauteile werden mit gleichen Bezugszeichen bezeichnet, die gegenüber der Ausführungsform der Figuren 20 bis 21A um 200 erhöht sind. Im Folgenden wird nur der Unterschied zu der Ausführungsform gemäß den Figuren 20 bis 21A beschrieben. Außerdem wird auf die übrige Beschreibung und insbesondere die Beschreibung der Figuren 20 bis 21A verwiesen.

Die Geberarmatur 600 gemäß Figur 34 weist eine Einstellvorrichtung 620 für die Griffweite auf. Ein Abstandsglied 621 ist in den Hebel 610 eingeschraubt und stützt sich auf dem Druckstück 670 ab. Dadurch wird die relative Lage, das heißt der Winkel zwischen dem Druckstück 670 und dem Hebel bezogen auf den Bolzen 611 verstellt. Unabhängig von der Verstellung der Griffweite kann der Druckpunkt bzw. der Leerweg durch das Betätigungsglied 622 bestimme oder verstellt werden, das die Spindel 630 in den Bolzen 612 verdreht, der in dem Druckstück 670 aufgenommen ist. Dabei wird der Leerweg zwischen einer drehfest gegenüber der Spindel angeordneten Hülse 623 und dem Bolzen 612 verstellt. Die Hülse 623 weist dabei ein Innengewinde auf, das mit einem an der Spindel vorgesehenen Außengewinde zusammenwirkt. Die maximale Einstellbarkeit ist durch einen Anschlag 639 begrenzt, der als ein an der Spindel 630 angeordneter Bund ausgebildet ist.

Der Stift 629 ist in dem Gehäuse angeordnet und definiert eine feste Drehlage des Kolbens 640, in dem der Stift 629 an einer an dem Kolben 640 ausgebildeten Fläche bzw. Abflachung 649 bei der Betätigung der Geberarmatur 600 entlang gleitet.

Der Stift 629 definiert die Endlage des Kolbens 640 in dem Gehäuse 650. Der Stift ist bei der dargestellten Ausführung aus Stahl ausgebildet und weist eine Stärke von ca. 1,5 mm auf. Damit sich der Stift trotz seiner geringen Abmessung (Durchmesser 1,5 mm) nicht verbiegt, ist als Sollbruchstelle die Verbindung zwischen dem Kopf 631 der Spindel 630 und der Aufnahme 641 in dem Kolben vorgesehen. Starke Kräfte können beispielsweise bei einem Sturz auftreten, bei dem der Hebel 610 entgegen der Betätigungsrichtung nach außen gedreht wird.

Da die Fläche bzw. Abflachung 649 eine abgeflachte Fläche im äußeren Bereich des Kolbens 640 ist bzw. aufweist, definiert der an dieser Abflachung 649 bzw. Fläche anliegende Stift 629 die Drehlage des Kolbens. Das hat den Vorteil, dass die relative Stellung des Kolbens 640 in axialer Richtung, das heißt, dass das Maß der Betätigung leichter erfasst werden kann. Insbesondere ist es nicht unbedingt notwendig, eine Kolbenlageerfassungseinrichtung 680 vorzusehen, die unabhängig von der Drehlage des Kolbens 640 in der Zylinderbohrung die Lage des Kolbens erfassen kann, d.h. die Lage des Kolbens 640 in axialer Richtung, d.h. ein Maß für die Betätigung der Geberarmatur 600. Beispielsweise kann die Kolbenlageerfassungseinrichtung einen Magneten 681 umfassen, der mit einem Sensor 682 zusammenwirkt, um die axiale Lage des Kolbens 640 in der Zylinderbohrung des Gehäuses 650 zu erfassen. Wenn der Kolben durch den Stift in einer bestimmten Drehlage gehalten wird, kann der Magnet 681 ein Stabmagnet sein. Der Magnet ist dabei vorzugsweise quer in dem Kolben 640 eingepresst und mit der Umfangsfläche des Kolbens 640 bündig bzw. mit diesem vergossen. Vorzugsweise ist der Magnet möglichst nahe an der Umfangsfläche des Kolbens 640 angeordnet, um eine möglichst gute Signalerzeugung zu ermöglichen. Der Sensor 682 kann beispielsweise einen Reedkontakt bzw. einen Hallsensor umfassen. Andere dem Fachmann bekannte Einrichtungen zur Erfassung einer axialen Stellung eines in einer Bohrung verschiebbar angeordneten Bauteils sind denkbar.

Gemäß einer nicht dargestellten Ausführung kann auch ein Clip vorgesehen werden, der den Kopf 631 der Spindel 630 in der Aufnahme 641 des Kolbens sichert. Das hat den Vorteil, dass die Feder 644 gegebenenfalls entfallen bzw. eine geringere Federkonstante aufweisen kann, weil der Hebel den Kolben in die Ruhelage zurückzieht, wenn beispielsweise die Feder 613 entsprechend stark ausgebildet ist. Nachteilig könnte sein, dass die Sollbruchstelle entfällt, die durch den in der Aufnahme 641 angeordneten Kopf 631 der Spindel 630 gebildet wird.

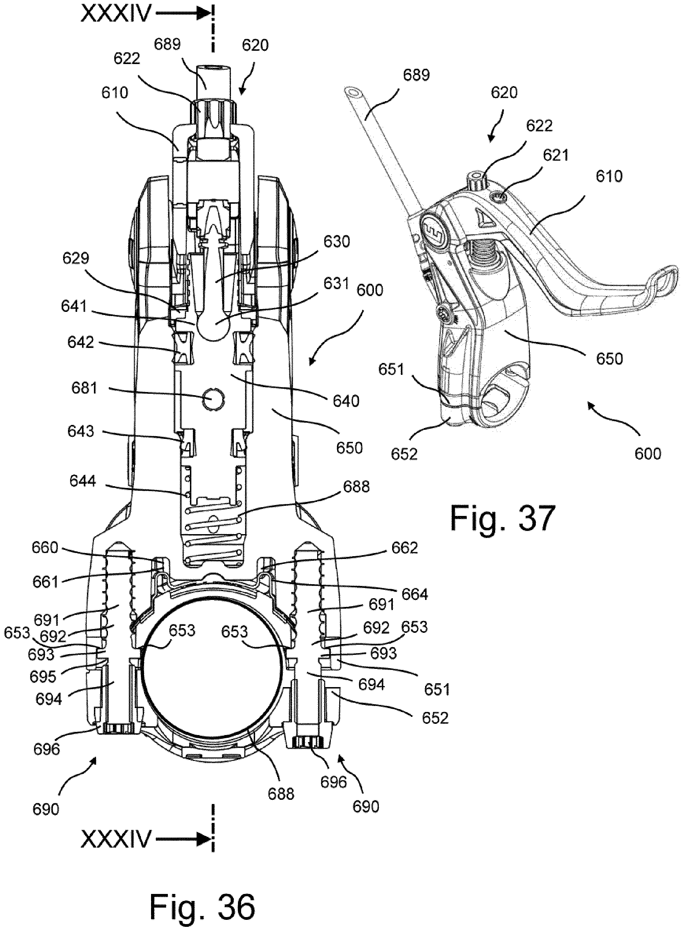

Figur 36 zeigt eine Schnittansicht der Geberarmatur von Figur 34 entlang der Linie XLI-XLI von Figur 34.

Insbesondere zeigt Fig. 36 die Befestigung der Geberarmatur an einem Lenkerrohr 688. Die Geberarmatur weist zwei Verbindungseinrichtungen 690 auf, die Stehbolzen umfassen. Die Verbindungseinrichtungen 690 weisen einen ersten Verbindungsabschnitt 691 auf, der jeweils in eine entsprechende Bohrung in dem Gehäuse 650 eingeschraubt ist. Anstelle einer Schraubverbindung kann auch eine Presspassung vorgesehen werden. Es kann auch eine Buchse in dem Gehäuse vorgesehen sein, in die der erste Verbindungsabschnitt eingepresst bzw. eingeschraubt bzw. geklebt ist. Es kann auch ein Stift und/oder Bolzen in dem Gehäuse vorgesehen sein, auf den der erste Verbindungsabschnitt (mit einem entsprechenden hohlen Abschnitt aufgeschraubt bzw. aufgepresst bzw. geklebt ist.

Die Verbindungseinrichtung 690 weist einen Bund 693 auf, der das Klemmteil 651 an das Gehäuse presst, sobald die Verbindungseinrichtung an dem Gehäuse 650 befestigt ist, und der Bund an den Anschlag 653 stößt um ein weiteres bzw. tieferes Eingreifen der Verbindungseinrichtung in das Gehäuse 650 zu begrenzen. Zur Abdichtung des Gehäuses 650 gegenüber dem Klemmteil 651 bzw. des Ausgleichsraums 660 kann der Balg 664 mit seinem Rand (siehe beispielsweise Figur 14, Bezugszeichen 232) zwischen das Gehäuse 650 und das Klemmteil 651 geklemmt werden. Der Ausgleichsraum 660 und der Balg 664 können vorteilhafterweise wie bei der in den Figuren 11 bis 17 gezeigten Ausführung ausgebildet sein. Das trifft auch für die anderen in der vorliegenden Offenbarung beschriebenen Ausführungen von Geberarmaturen zu.

Die Verbindungseinrichtung 690 weist einen Spezialwerkzeugeingriff 695 auf. Mit einem Spezialwerkzeug kann die Verbindungseinrichtung 690 an dem Gehäuse befestigt werden. In dieser Form kann die Geberarmatur an den Endkunden bzw. Benutzer vertrieben werden. Das hat den Vorteil, dass eine unbeabsichtige falsche Montage verhindert werden kann.

Die Verbindungseinrichtung 690 weist einen zweiten Verbindungsabschnitt 694 auf. Das Gegenstück 652 weist Aussparungen zur Aufnahme der zweiten Verbindungsabschnitte 694 auf. Zur Befestigung des Gegenstücks 652 an der Verbindungseinrichtung 690 sind Befestigungsmuttern 696 vorgesehen, die auf dem Fachmann bekannte Weise auf den zweiten Verbindungsabschnitt geschraubt werden. Bei der Verbindung zwischen Gegenstück 652 und Klemmteil 651 bzw. Gehäuse 650 wird das Lenkerrohr 688 zwischen dem Klemmteil 651 und dem Gegenstück 652 eingeklemmt.

Die Geberarmatur 600 weist eine Feder 613 auf, die vorzugsweise als Schenkelfeder ausgebildet ist. Die Feder 613 spannt das Druckstück 670 um den Bolzen 611 bzw. den durch den Bolzen definierten Drehpunkt gegenüber dem Gehäuse 650 nach außen vor. Dadurch ergibt sich der Vorteil, dass die Feder 613 das Spiel für den Benutzer subjektiv wegfallen lässt, d.h. den Leerweg zwischen dem Bolzen 612 und der Hülse 623, den der Benutzer bei der Betätigung überfahren muss, bevor die Spindel 630 nach unten in Richtung Kolben 640 bei Betätigung des Brems- bzw. Kupplungshebels 610 versetzt wird. Mit anderen Worten, spannt die Feder 613 das Druckstück 670 derart nach außen, dass der Leerweg zwischen Bolzen 612 und Hülse 623 bei der Betätigung vollständig überfahren werden muss und der Hebel 610 bzw. das Druckstück 670 nicht "wackelt". Gleichzeitig spannt die Feder 613 den das Druckstück 670 gegenüber dem Hebel 610 bzw. die darin angeordnete Griffweiteneinstellvorrichtung 621 nach außen, so dass dort ebenfalls kein Spiel vorhanden ist, sondern der Hebel 610 über die Griffweiteneinstellvorrichtung 621 immer an dem Druckstück 670 anliegt. Die Feder 613 hat somit eine Doppelfunktion indem die Feder 613 einerseits das Druckstück nach außen vorspannt (um den Leerweg bei der Betätigung zu schaffen, der den Druckpunkt definiert), und andererseits das Druckstück 670 gegenüber dem Bremshebel 610 nach außen vorspannt, um ein Spiel bei der Griffweiteneinstellvorrichtung 621 zu vermeiden.

Alternativ zu der dargestellten Schenkelfeder 613 kann auch eine andere Federeinrichtung vorgesehen werden, die ebenfalls das Gehäuse 650 von dem Druckstück 670 auseinanderdrückt bzw. voneinander weg vorspannt. Beispielsweise kann eine Druckfeder auf einer bezogen auf den Drehpunkt bzw. den Bolzen 612 der Spindel 630 gegenüberliegenden Seite angeordnet sein.

Die Ausführung der Figuren 34, 36 und 37 hat außerdem den Vorteil, dass die Griffweite unabhängig von dem Druckpunkt eingestellt werden kann.

Figur 35 zeigt eine weitere Ausführung der Erfindung, die im Wesentlichen der Ausführung von Figur 34 entspricht. Die entsprechenden Teile sind mit gleichen Bezugszeichen bezeichnet, die um 100 erhöht sind. Im Folgenden werden nur die Unterschiede zu der Ausführung von Figur 34 beschrieben und im Übrigen auf deren Beschreibung verwiesen.

Die Ausführung von Figur 35 unterscheidet sich von der Ausführung der Figur 34 dahingehend, dass nur eine Griffweitenverstellung vorgesehen ist, während eine Verstellung des Druckpunkts nicht vorgesehen ist. Die Griffweite wird durch Drehen der Spindel 730 in dem Bolzen 712 erreicht. Bei der Ausführung von Figur 35 ist nur das Signalglied 781 dargestellt. Der Sensor ist in dieser Schnittansicht nicht dargestellt. Er ist neben dem Signalglied 781 im Gehäuse 750 vorgesehen. Die Verdrehsicherung des Kolbens 740 wird bei der Ausführung von Figur 35 dadurch erreicht, dass der Kolben eine Abflachung 749 aufweist, an die der Stift 729 in der Ruhelage des Kolbens zur Anlage kommt. Dadurch wird der Kolben immer wieder in der Ruhelage in die Ausgangsstellung zurückgedreht. Da auf den Kolben keine Kräfte in Umfangsrichtung wirken, kann durch diese zeitweise Ausrichtung des Kolbens ein Verdrehen des Kolbens mit hinreichender Sicherheit verhindert werden.

## Patentansprüche

1. Geberarmatur für ein hydraulisches Bremssystem oder Kupplungssystem, insbesondere eines lenkergeführten Fahrzeugs, insbesondere eines Fahrrads, mit einem einen Kolbenraum enthaltenden Gehäuse, in dem ein darin verschiebbarer Kolben und ein Druckraum angeordnet ist, und einem Ausgleichsraum, der über zumindest eine Ausgleichsbohrung mit dem Druckraum verbunden ist, wobei das Gehäuse einen Befestigungsabschnitt zur Befestigung an einem Lenkerrohr aufweist, und der Ausgleichsraum sich bis zu dem Befestigungsabschnitt erstreckt und ein Trennglied zur Trennung des hydraulischen Mediums von einem Ausgleichsvolumen aufweist,
**dadurch gekennzeichnet, dass** der Befestigungsabschnitt ein Klemmteil aufweist, das derart ausgebildet und angeordnet ist, dass es das Trennglied an dem Befestigungsabschnitt befestigt.

2. Geberarmatur für ein hydraulisches Bremssystem oder Kupplungssystem, insbesondere eines lenkergeführten Fahrzeugs, insbesondere eines Fahrrads, mit einem einen Kolbenraum enthaltenden Gehäuse, in dem ein darin verschiebbarer Kolben und ein Druckraum angeordnet ist, und einem Ausgleichsraum, der über zumindest eine Ausgleichsbohrung mit dem Druckraum verbunden ist, wobei das Gehäuse einen Befestigungsabschnitt zur Befestigung an einem Lenkerrohr aufweist, und der Ausgleichsraum sich bis zu dem Befestigungsabschnitt erstreckt und ein Trennglied zur Trennung des hydraulischen Mediums von einem Ausgleichsvolumen aufweist,
**dadurch gekennzeichnet, dass** der Befestigungsabschnitt und das Trennglied derart angeordnet und ausgebildet sind, dass das Trennglied bei der Befestigung der Geberarmatur an einem Lenkerrohr vorzugsweise mit seinem Rand zwischen dem Lenkerrohr und dem Befestigungsabschnitt geklemmt wird.

3. Geberarmatur für ein hydraulisches Bremssystem oder Kupplungssystem, insbesondere eines lenkergeführten Fahrzeugs, insbesondere eines Fahrrads, mit einem einen Kolbenraum enthaltenden Gehäuse, in dem ein darin verschiebbarer Kolben und ein Druckraum angeordnet ist, und einem Ausgleichsraum, der über zumindest eine Ausgleichsbohrung mit dem Druckraum verbunden ist, wobei das Gehäuse einen Befestigungsabschnitt zur Befestigung an einem Lenkerrohr aufweist, und der Ausgleichsraum sich bis zu dem Befestigungsabschnitt erstreckt und ein Trennglied zur Trennung des hydraulischen Mediums von einem Ausgleichsvolumen aufweist,
**dadurch gekennzeichnet, dass** das Trennglied ein mit Gas befüllter Körper und/oder ein komprimierbarer Körper und/oder ein elastisch verformbarer Körper ist, der in dem Ausgleichsraum und/oder an einem Lenkerrohr angeordnet ist.

4. Geberarmatur für ein hydraulisches Bremssystem oder Kupplungssystem, insbesondere eines lenkergeführten Fahrzeugs, insbesondere eines Fahrrads, mit einem einen Kolbenraum enthaltenden Gehäuse, in dem ein darin verschiebbarer Kolben und ein Druckraum angeordnet ist, und einem Ausgleichsraum, der über zumindest eine Ausgleichsbohrung mit dem Druckraum verbunden ist, wobei das Gehäuse einen Befestigungsabschnitt zur Befestigung an einem Lenkerrohr aufweist, und der Ausgleichsraum sich bis zu dem Befestigungsabschnitt erstreckt und ein Trennglied zur Trennung des hydraulischen Mediums von einem Ausgleichsvolumen aufweist,
**dadurch gekennzeichnet, dass** sich der Ausgleichsraum bei einer an einem Lenkerrohr befestigten Geberarmatur in das Lenkerrohr erstreckt, wobei das Trennglied vorzugsweise in einer Öffnung in dem Lenkerrohr angeordnet ist und/oder sich in das Lenkerrohr erstreckt.

5. Geberarmatur nach einem der vorhergehenden Ansprüche, bei der der Befestigungsabschnitt ein Klemmteil aufweist, das derart ausgebildet und angeordnet ist, dass es das Trennglied an dem Befestigungsabschnitt befestigt, und/oder
bei der der Befestigungsabschnitt und das Trennglied derart angeordnet und ausgebildet sind, dass das Trennglied bei der Befestigung der Geberarmatur an einem Lenkerrohr vorzugsweise mit seinem Rand zwischen dem Lenkerrohr und dem Befestigungsabschnitt geklemmt wird, und/oder
bei der das Trennglied ein mit Gas befüllter Körper und/oder ein komprimierbarer Körper und/oder ein elastisch verformbarer Körper ist, der in dem Ausgleichsraum und/oder an einem Lenkerrohr angeordnet ist,
bei der sich der Ausgleichsraum bei einer an einem Lenkerrohr befestigten Geberarmatur in das Lenkerrohr erstreckt, wobei das Trennglied vorzugsweise in einer Öffnung in dem Lenkerrohr angeordnet ist und/oder sich in das Lenkerrohr erstreckt.

6. Geberarmatur nach einem der vorhergehenden Ansprüche, bei der das Klemmteil als Rahmen und/oder das Trennglied als Balg ausgebildet ist, wobei das Klemmteil vorzugsweise zumindest eine oder mehrere Stege aufweist.

7. Geberarmatur nach einem der vorhergehenden Ansprüche, bei der das Klemmteil zumindest einen oder mehrere Belüftungskanäle aufweist.

8. Geberarmatur nach einem der vorhergehenden Ansprüche, des Weiteren mit einem Gegenstück zur Befestigung der Geberarmatur an einem Lenkerrohr, und zumindest einer Verbindungseinrichtung zur Verbindung des Gegenstücks mit dem Gehäuse der Geberarmatur.

9. Geberarmatur nach dem vorhergehenden Anspruch, bei der die zumindest eine Verbindungseinrichtung einen ersten Verbindungsabschnitt zur Verbindung des Klemmteils mit dem Gehäuse der Geberarmatur und einen zweiten Verbindungsabschnitt zur Verbindung des Gegenstücks mit der Geberarmatur und zur Befestigung der Geberarmatur an einem Lenkerrohr aufweist, und/oder bei der zwischen dem ersten Verbindungsabschnitt und dem zweiten Verbindungsabschnitt der zumindest einen Verbindungseinrichtung ein Bund vorgesehen ist.

10. Geberarmatur nach einem der vorhergehenden Ansprüche, bei der zumindest eine weitere Ausgleichsbohrung vorgesehen ist, die den Druckraum mit dem Ausgleichsraum verbindet, und/oder der Ausgleichsraum zwischen der zylinderförmigen Wand des Kolbenraums und der Gehäusewand des den Kolbenraum aufnehmenden Gehäuses der Geberarmatur vorgesehen ist, und/oder
bei der zwischen der den Kolbenraum abgrenzenden zylinderförmigen Wand und einer den Ausgleichsraum definierenden Wandung (die insbesondere eine Wand des Gehäuses der Geberarmatur sein kann) zumindest ein Steg und/oder eine Rippe vorgesehen ist, die die Ausgleichsraumwand mit der Kolbenraumwand verbindet, und/oder
bei der der Ausgleichsraum zumindest teilweise die zylinderförmige Wand des Kolbenraums umschließt, und/oder
bei der der Ausgleichsraum in zumindest zwei Sektoren unterteilt ist, die seitlich von der zylinderförmigen den Kolbenraum begrenzenden Wand angeordnet sind.

11. Geberarmatur (300) nach einem der vorhergehenden Ansprüche, die einen Bremshebel (310) und ein Zylindergehäuse (350) aufweist, in dem ein Kolben (340) verschiebbar angeordnet ist, der über eine Spindel (330) mit dem Bremshebel (310) verbunden ist, wobei die Geberarmatur eine Einstellvorrichtung zum Einstellen der Griffweite und des Druckpunkts aufweist, **dadurch gekennzeichnet, dass** die Einstellvorrichtung ein Betätigungselement (320) aufweist, mit dem in einer ersten Stellung die Griffweite und in einer zweiten Stellung der Druckpunkt einstellbar ist.

12. Geberarmatur (400) nach einem der vorhergehenden Ansprüche, die einen Hebel (410), ein Druckstück (470) und ein Zylindergehäuse (450) aufweist, in dem ein Kolben (440) verschiebbar angeordnet ist, wobei der Kolben (440) mit dem Druckstück (470) über eine Spindel (430) verbunden ist, wobei die Geberarmatur (400) eine Einstellvorrichtung (420) zum Einstellen der Griffweite durch Verstellen des Winkels zwischen dem Hebel (410) und dem Druckstück (470) aufweist, wobei sich die Einstellvorrichtung (420) auf dem Druckstück abstützt, **dadurch gekennzeichnet, dass** die Einstellvorrichtung (420) einen Abstandshalter (422) aufweist, der sich auf dem Druckstück (470) abstützt und der durch das Druckstück (470) gegen eine Verdrehung gesichert ist.

13. Geberarmatur (500) nach einem der vorhergehenden Ansprüche, die einen Hebel (510) und ein Zylindergehäuse (550) aufweist, in dem ein Kolben (540) verschiebbar angeordnet ist, wobei der Kolben (540) über eine Spindel mit dem Hebel (410) verbunden ist, wobei die Geberarmatur (500) eine Druckpunkteinstellvorrichtung (520) aufweist, **dadurch gekennzeichnet, dass** die Druckpunkteinstellvorrichtung (520) derart angeordnet und ausgebildet ist, dass der Endanschlag des Kolbens (54) an dem Gehäuse (550) einstellbar ist.

14. Geberarmatur (500) nach Anspruch 13, bei der die Druckpunkteinstellvorrichtung (520) ein mit dem Gehäuse (550) drehfestes Anschlagglied (521) aufweist, das axial gegenüber dem Gehäuse (550) verschiebbar angeordnet ist, und/oder das die Einstellvorrichtung (520) ein Einstellglied (522) aufweist, das relativ zu dem Zylindergehäuse (550) verdrehbar angeordnet ist, und dessen Bewegung in axialer Richtung bezogen auf den Zylinder begrenzt ist.

15. Geberarmatur (600) für eine hydraulische Bremse oder Kupplung, die einen Hebel (610, 710) und ein Zylindergehäuse (610, 710) aufweist, in dem ein Kolben (640, 740) verschiebbar angeordnet ist, **dadurch gekennzeichnet, dass** der Kolben (640, 740) gegen Drehen in dem Zylindergehäuse (650, 750) gesichert ist, und dass die Kolbenlageerfassungseinrichtung (680, 780) ein bezogen auf den Umfang des Kolbens (640, 740) asymmetrisch angeordnetes Signalglied und ein dem Signalglied zugeordnetes und/oder gegenüberliegendes Erfassungsglied aufweist.
